# EUROPEAN PATENT SPECIFICATION

(11) **EP 2 720 415 B1**
(45) Date of publication and mention of the grant of the patent: **20.01.2016**
(21) Application number: 11858220.4
(22) Date of filing: 22.07.2011
(51) Int. Cl.: H04L 12/46, H04L 12/751, H04L 12/717

(54) **ROUTING CONTROL METHOD, APPARATUS AND SYSTEM OF LAYER 3 VIRTUAL PRIVATE NETWORK**
ROUTINGSTEUERVERFAHREN, VORRICHTUNG UND SYSTEM FÜR VIRTUELLES PRIVATES SCHICHT-3-NETZWERK
PROCÉDÉ DE COMMANDE DE ROUTAGE, APPAREIL ET SYSTÈME DE RÉSEAU PRIVÉ VIRTUEL DE COUCHE 3

(43) Date of publication of application: 16.04.2014
(73) Proprietor: Huawei Technologies Co., Ltd., Longgang District Shenzhen, Guangdong 518129 (CN)
(72) Inventor: SUN, Jun, Shenzhen Guangdong 518129 (CN); RAO, Guoyi, Shenzhen Guangdong 518129 (CN); CAI, Junzhou, Shenzhen Guangdong 518129 (CN); ZHOU, Zihao, Shenzhen Guangdong 518129 (CN)
(74) Representative: Thun, Clemens
(86) International application number: PCT/CN2011/077516
(87) International publication number: WO 2012/106919

(56) References cited:
- EP-A1- 1 684 469
- EP-A1- 2 157 746
- CN-A- 101 072 238
- CN-A- 101 616 093
- US-A1- 2010 158 010
- EL MGHAZLI Y ET AL: "Framework for Layer 3 Virtual Private Networks (L3VPN) Operations and Management; rfc4176.txt", 20051001, 1 October 2005 (2005-10-01), XP015041833, ISSN: 0000-0003
- ROSEN CISCO SYSTEMS E ET AL: "BGP/MPLS IP Virtual Private Networks (VPNs); rfc4364.txt", 20060201, 1 February 2006 (2006-02-01), XP015044797, ISSN: 0000-0003

## Description

### FIELD OF THE INVENTION

The present invention relates to the field of radio network technologies, and in particular, to a layer 3 virtual private network route control method, device, and system.

### BACKGROUND OF THE INVENTION

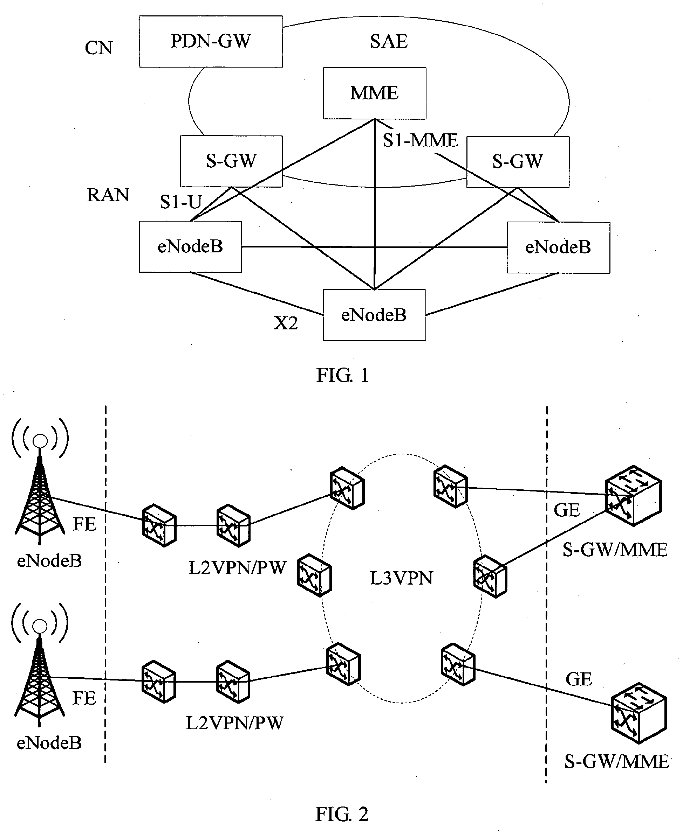

With the development of radio network technologies, a next generation mobile access network develops towards a long term evolution (Long Term Evolution, LTE) network. As shown in FIG. 1, the LTE network is mainly divided into two parts, namely, an evolved packet core (Envoled Packet Core, EPC) and an evolved UMTS terrestrial radio access network (Envoled UMTS Terrestrial Radio AcCEnodess Network, E-UTRAN), where the EPC is called a core network, and the E-UTRAN is called an access network.

The LTE core network is mainly formed of several major functional entities including an MME (Mobility Management Entity, mobility management entity), an SGW (Service gateway, service gateway) and a PGW (Packet Gateway, packet gateway). The MME is mainly responsible for control functions of users and session management. The SGW is mainly responsible for data transmission and forwarding and route switching on a user plane. The PGW is an anchor point for external data network access.

The LTE access network is mainly formed of an eNB (evolved Node B, evolved Node B). Compared with a conventional 2G/3G access network formed of two layers of node of Node B (base station) and RNC (Radio Network Controller, radio network controller), the LTE access network does not have the layer of RNC, and an eNB directly accesses a core network device. The flat structure simplifies a network structure and reduces network delay.

A mobile backhaul transport network is configured to provide a transport channel between the eNB and the core network, so as to realize backhaul of a mobile service. The mobile backhaul transport network is formed of transport network devices.

In the LTE network, network entities are all IP-based, and configured with IP addresses. Links between the eNBs and the mobile backhaul transport network and between the core network entities and the mobile backhaul transport network are all Ethernet links.

FIG. 2 is a schematic diagram of an LTE mobile backhaul transport network, which needs to support the following major functions:
supporting an S1 interface: for information backhaul between an eNB and an MME/SGW; where the S1 interface allows an eNB to be connected to multiple MME/SGW POOLs (pools), so as to achieve load balancing, disaster recovery and so on; the MME/SGW sends local route information to the eNB, and the eNB automatically establishes a service to the MME/SGW according to the received route information;
supporting an X2 interface: for distributed interfaces between neighboring eNBs, and mainly for mobility management (switching) and the interference suppression of neighboring cells, where an eNB establishes a logical connection with a neighboring Node B, so as to perform interaction of switching signaling; and
migration for expansion: when the LTE network expands, the relationship between the eNB and the MME/SGW needs to be adjusted, where the adjustment of the relationship between the eNB and the MME/SGW is automatically implemented by controlling MME/SGW route information to be sent to a corresponding eNB.

It is a new trend that by creating an L3VPN on the mobile backhaul transport network, the mobile backhaul transport network is enabled to realize the three functions.

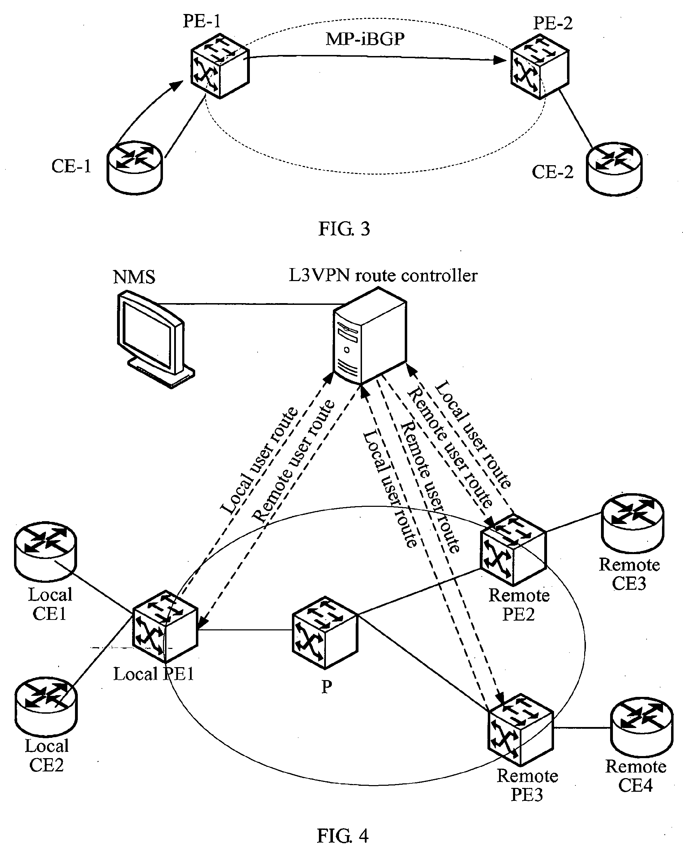

As shown in FIG. 3, in order to realize intercommunication between different CE nodes, an intermediate operator network creates a BGP L3VPN by using the MP-BGP protocol, so as to realize packet intercommunication between CE nodes.

The L3VPN network is mainly formed of three parts, namely, a customer edge router (Custom Edge Router, CE node), a provide edge router (Provider Edge Router, PE) and a provider router (Provider Router, P).

The CE node is directly connected to a service provider network. When sending a packet, the CE node only needs to send the packet to a service provider network PE node connected to the CE node, and does not need to understand how the interior of the service provider network transmits the packet to a target CE node. Interior processing of the service provider network is transparent to the CE node.

The PE node is directly connected to the CE node, responsible for VPN service access, converting a CE node route to a VPN-IPv4 route, processing the VPN-IPv4 route, and is a major implementer of a multi-protocol label switching (Multi-protocol Label Switching, MPLS) layer 3 VPN.

The P is responsible for rapidly forwarding a data packet, and is not directly connected to the CE node. When sending a packet, the P does not need to understand how the interior of the service provider network transmits the packet to a target CE node either.

In order to realize intercommunication between different CE nodes in an L3VPN network, an operator uses the multi-protocol border gateway protocol (Multi-protocol Border Gateway protocol, MP-BGP) protocol to realize packet intercommunication between different CE nodes.

In order to multiplex an IP address in different L3VPNs (that is, a same IP address may be used in CE nodes belonging to different L3VPNs), the PE node introduces a route distinguisher (Route Distinguisher, RD) attribute, converts local VPN user route information to a VPNv4 address family, and transfers a VPN user route between PE node peers through the MP-BGP protocol. After the VPN user route of a local PE node is transferred to a remote PE node, even if address space overlapping exists, the remote PE node can still distinguish user routes belonging to different VPNs according to the RD attribute.

In order to realize mutual-access and isolation between different L3VPNs, in the BGP/MPLS VPN technology, a route target (Route Target, RT) attribute is introduced. Each PE node stores a virtual routing and forwarding table (Virtual Routing and Forwarding, VRF), and each VRF has Import RT and Export RT attributes. When a local PE node transfers a VPN route to a remote PE node of the local PE node, first the Export RT needs to be used to mark the VPN route exported from a VRF table. When the local PE node receives VPN route information sent by the remote PE node, an Import RT mark carried by the VPN route information is compared with the Import RT in each VRF table in the local PE node, and only a matching route rather than routes of L3VPNs of the whole network can be imported into the VRF table, thereby forming different L3VPNs and realizing mutual-access and isolation of the L3VPNs.

In the prior art, when a PE node releases L3VPN route information through the border gateway protocol (Border Gateway protocol, BGP), an update (UPDATE) packet in the BGP shall carry the following information:
extended NLRI (Network Layer Reachability Information), added with the description of an address family, a VPN label (label), and an RD.

| MP_REACH_NLRI: | |
|---|---|
| address-family: | VPN-IPV4 address family |
| next-hop: | the PE node, usually a loopback address |

| NLRI: | |
|---|---|
| label: | 24 bits, being the same as an MPLS label, but without TTL |
| prefix: | RD:64bit+ip prefix |
| Extended_Communities (RT1) | |
| Extended_Communities (RT2) | |
| ..... | |

The import route target RT and the export route target RT are both carried by Extended Communities in the table, and arrive at a remote PE node.

In the prior art, defects incurred by adopting the BGP L3VPN technical solution are as follows:

The technologies such as RD and RT are introduced into the BGP L3VPN to control the release and receiving of a route, and the MP-BGP protocol uses multiple complex policies and technologies to better satisfy various requirements in network deployment, so that the difficulty in deploying the BGP L3VPN is increased, and the complicated MP-BGP protocol increases the complexity of deployment, maintenance and failure recovery of the network.

In order to avoid the defects such as complex maintenance and poor reliability of the network incurred by introducing the MP-BGP dynamic routing protocol, providing an L3VPN technology, which is simplified and easy to use, in the LTE bearer network is a technical problem requiring an urgent solution.

EP 2 157 746 A1 discloses a routing control system which comprises a system controller and master and slave routing servers, wherein the master routing server includes a plurality of logical controllers, each of which performs routing control for each of the user networks, the system controller monitors a load state of the master routing server and migrates at least one of the plurality of logical controllers from the master routing server to the slave routing server when the load state has satisfied a predetermined condition, so that the slave routing server inherits routing control for a particular user network associated with the migrated logical controller.

EP 1 684 469 A1 discloses that a virtual private network (VPN) based on a multiprotocol label switching (MPLS) technique is established by an MPLS-based VPN providing apparatus and method. The MPLS-based VPN providing apparatus and method are capable of simplifying the use of protocols, reducing a load, and guaranteeing quality of service (QoS) by adopting a centralized control structure.

EL MGHAZLI Y ET AL: "Framework for Layer 3 Virtual Private Networks (L3VPN) Operations and Management; rfc4176.txt", 20051001, 1 October 2005 (2005-10-01), XP015041833, ISSN: 0000-0003 discloses a framework for the operation and management of Layer 3 Virtual Private Networks (L3VPNs). This framework intends to produce a coherent description of the significant technical issues that are important in the design of L3VPN management solutions.

ROSEN CISCO SYSTEMS E ET AL: "BGP/MPLS IP Virtual Private Networks (VPNs); rfc4364.txt", 20060201, 1 February 2006 (2006-02-01), XP015044797, ISSN: 000-0003 discloses a method by which a Service Provider may use an IP backbone to provide IP Virtual Private Networks (VPNs) for its customers. This method uses a "peer model", in which the customers' edge routers (CE routers) send their routes to the Service Provider's edge routers (PE routers); there is no "overlay" visible to the customer's routing algorithm, and CE routers at different sites do not peer with each other. Data packets are tunneled through the backbone, so that the core routers do not need to know the VPN routes.

### SUMMARY OF THE INVENTION

Embodiments of the present invention provide a method and device of layer 3 virtual private network route control, so as to solve the technical problems in the prior art such as complex maintenance and poor reliability of the network incurred by application of the BGPL3VPN technology, which can simplify route control and management of each PE node in an L3VPN network, and is an L3VPN technology that is simple and easy for maintenance.

An embodiment of the present invention provides a layer 3 virtual private network route control method, in which a layer 3 virtual private network L3VPN includes a local customer edge device CE node, a remote CE node, a local provider edge device PE node connected to the local CE node, and a remote PE node connected to the remote CE node, and an L3VPN route controller is further deployed in the L3VPN, and the method includes:
creating a VPN for the local PE node and the remote PE node respectively wherein the local PE node and the remote PE node belong to the VPN, adding a local CE node routing table entry belonging to the VPN created on the local PE node to the VPN created on the local PE node;
acquiring, by the L3VPN route controller, VPN attribute information of the VPN created on the local PE node and the local CE node routing table entry belonging to the VPN, and acquiring VPN attribute information of the VPN created on the remote PE node;
generating, by the L3VPN route controller, a remote CE node routing table entry according to the VPN attribute information of the VPN created on the local PE node and the local CE node routing table entry in the VPN; and
sending, by the L3VPN route controller, the generated remote CE node routing table entry to the remote PE node according to the VPN attribute information of the VPN created on the local PE node and the VPN attribute information of the VPN created on the remote PE node, so that the remote PE node forwards a data packet that is from the remote CE node to the local CE node.

The present invention further provides a layer 3 virtual private network route controller, which includes:
a route acquisition module, configured to acquire, from a layer 3 virtual private network L3VPN, VPN attribute information of a VPN created on a local PE node and a local CE node routing table entry belonging to the VPN; and acquire VPN attribute information of a VPN created on a remote PE node in the L3VPN;
a route conversion module, configured to generate a remote CE node routing table entry according to the VPN attribute information of the VPN created on the local PE node and the local CE node routing table entry in the VPN; and
a route diffusion module, configured to send the generated remote CE node routing table entry to the remote PE node according to the VPN attribute information of the VPN created on the local PE node and the VPN attribute information of the VPN created on the remote PE node, so that the remote PE node forwards a data packet that is from a remote CE node to a local CE node.

An example embodiment further provides a layer 3 virtual private network system, a layer 3 virtual private network L3VPN includes a local customer edge device CE node, a remote CE node, a local provider edge device PE node connected to the local CE node, and a remote PE node connected to the remote CE node, and an L3VPN route controller is further deployed in the L3VPN.

The L3VPN route controller acquires VPN attribute information of the VPN created on the local PE node and the local CE node routing table entry belonging to the VPN, and acquires VPN attribute information of the VPN created on the remote PE node.

The L3VPN route controller generates a remote CE node routing table entry according to the VPN attribute information of the VPN created on the local PE node and the local CE node routing table entry in the VPN.

The L3VPN route controller sends the generated remote CE node routing table entry to the remote PE node according to the VPN attribute information of the VPN created on the local PE node and the VPN attribute information of the VPN created on the remote PE node, so that the remote PE node forwards a data packet that is from the remote CE node to the local CE node.

Beneficial effects of the embodiments of the present invention are as follows:

In an L3VPN route control method, an L3VPN route controller and an L3VPN network system according to the embodiments of the present invention, the complex BGP protocol does not need to be deployed in a PE node in the L3VPN system, and the L3VPN route controller interacts with a PE node and an NMS by using an existing management interface, and reads and configures an L3VPN route. L3VPN route control and transfer are centralized in the L3VPN route controller, which simplifies route control and management of each PE node, thereby greatly reducing costs of deployment and maintenance while providing an L3VPN route automatic control function, which meets the requirement from a conventional mobile operator that an L3VPN scheme shall be simple and easy for maintenance.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons skilled in the art may derive other drawings from the accompanying drawings without creative efforts.
FIG. 1 is a schematic architectural diagram of an LTE network in the prior art;
FIG. 2 is a schematic diagram of an LTE mobile backhaul transport network in the prior art;
FIG. 3 is a schematic diagram of route diffusion in a BGP L3VPN network in the prior art;
FIG. 4 is a schematic diagram of Embodiment 1 of an L3VPN network system according to an embodiment of the present invention;
FIG. 5 is a schematic diagram of an L3VPN configured on a PE node in an L3VPN network system according to an embodiment of the present invention;
FIG. 6 is a schematic flow chart of a method configuring an L3VPN on a PE node in an L3VPN route control method according to an embodiment of the present invention;
FIG. 7 is a schematic flow chart of Embodiment 1 of an L3VPN route control method according to an embodiment of the present invention;
FIG. 8 is a schematic diagram of local CE node route diffusion in an L3VPN network system according to an embodiment of the present invention;
FIG. 9 is a schematic flow chart of local CE node route diffusion in an L3VPN route control method according to an embodiment of the present invention;
FIG. 10 is a schematic flow chart of packet forwarding in an L3VPN route control method according to an embodiment of the present invention;
FIG. 11 is a schematic diagram of Embodiment 2 of an L3VPN network system according to an embodiment of the present invention;
FIG. 12 is a schematic structural diagram of Embodiment 1 of an L3VPN route controller according to an embodiment of the present invention;
FIG. 13 is a schematic structural diagram of Embodiment 2 of an L3VPN route controller according to an embodiment of the present invention;
FIG. 14 is a schematic structural diagram of Embodiment 3 of an L3VPN route controller according to an embodiment of the present invention; and
FIG. 15 is a schematic structural diagram of Embodiment 4 of an L3VPN route controller according to an embodiment of the present invention.

### DETAILED DESCRIPTION OF THE EMBODIMENTS

Specific embodiments of the present invention are illustrated below with reference to the accompanying drawings.

The problem to be solved by the embodiments of the present invention is how to simplify route control and management of each PE node in an L3VPN, so as to greatly reduce the cost and price of deploying and maintaining an L3VPN network.

FIG. 4 is a schematic diagram of an L3VPN network system according to an embodiment of the present invention.

As shown in FIG. 4, the L3VPN network system provided by the present invention includes: a local customer edge device CE node, at least one remote CE node, a local provider edge device PE node connected to the local CE node, and at least one remote PE node connected to the remote CE node. An L3VPN route controller (L3VPN Route Controller) is further deployed in the L3VPN. Optionally, the L3VPN network system further includes a provider router P.

It should be noted first that the local CE node refers to a CE node that diffuses a route address of a local CE network to the outside, in which the route address is used as a route of the CE node, the local CE network refers to a local network where a terminal user locates, and the local CE network communicates with a service provider network through the local CE node.

The local PE node refers to a PE node directly connected to the local CE node.

The remote CE node refers to a CE node which belongs to a same VPN with the local CE node.

The remote PE node refers to a PE node directly connected to the remote CE node.

It should be noted that, in the present invention, the local and the remote are a relative concept. For example, in FIG. 4, a CE node 1 (or a CE node 2) is used as a local CE node, and a CE node 3 and a CE node 4 are corresponding remote CE nodes. PE1 is directly connected to the local CE node 1, and is used as a local PE. Other PE2 and PE3 are corresponding remote PEs. Definitely, in other embodiments, the CE node 3 may be used as a local CE node, other CE nodes are used as remote CE nodes, PE2 connected to the CE node 3 is correspondingly a local PE node, and other PE nodes are remote PE nodes.

Correspondingly, a local CE node routing table entry refers to a routing table entry received on a link directly connected to the local CE node, or a static routing table entry configured on a link directly connected to the local CE node.

A remote CE node routing table entry refers to a remote CE node routing table entry which is received through an L3VPN route controller and generated by a local CE node route.

When a VPN is created on any PE node that needs to create an L3VPN, a routing table entry of a CE node directly connected to the PE node needs to be added to the VPN, that is, for a remote PE node, the remote PE node also stores a local CE node routing table entry relative to the remote PE node. In the present invention, a local PE node in a packet forwarding process is used as an example to illustrate an implementation manner of adding a local CE node routing table entry in a VPN created on a PE node.

It should be noted that in a specific implementation process, the CE node may be a CE router, and the PE node may be a PE router.

In an exemplary embodiment, the L3VPN network system provided by the present invention further includes a network management server NMS, which is configured to create a VPN for the local PE node and a remote PE node respectively, which need to create an L3VPN and collectively belong to the VPN, and add a local CE node routing table entry belonging to the VPN created on the local PE node to the VPN created on the local PE node.

After configuring the VPN on each PE node successfully, the NMS notifies the L3VPN route controller of VPN attribute information of the VPN and the local CE node routing table entry in the VPN.

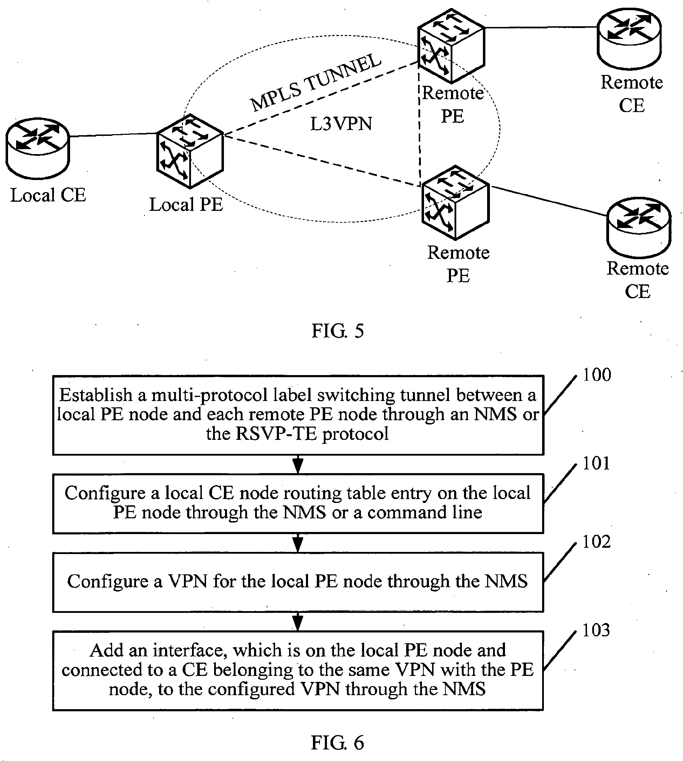

In a specific implementation process, the NMS creates a VPN for each PE node that locates in the L3VPN network and needs to create a new L3VPN. An implementation process in which the NMS configures the VPN on each PE node in the L3VPN network system is described below in detail with reference to FIG. 5 and FIG. 6. FIG. 5 is a schematic diagram of a system in which an L3VPN is configured on a PE node. FIG. 6 is a schematic flow chart of configuring the L3VPN on the PE nodes.

Step 100: Establish a multi-protocol label switching tunnel (MPLS Tunnel) between each remote PE node and a local PE node through an NMS or the RSVP-TE protocol.

Step 101: Configure a local CE node routing table entry on the local PE node through the NMS or a command line, that is, configure the local CE node routing table entry. The configured local CE node routing table entry includes: a local CE node route address and an outgoing interface index.

Step 102: Configure, through the NMS, a new VPN for each PE node that needs to establish an L3VPN. Specifically, two manners are available:
Manner 1: A VPN Label allocated to each PE node is statically specified on the NMS.

On the NMS, a VPN Label is allocated to each PE node.

On the NMS, through an NMI interface, a VPN create request message is delivered to each PE node. The VPN create request message includes: a VPN ID, a VPN name, and a VPN Label.

After receiving the VPN create request, each PE node creates a VPN table, and fills the VPN ID, VPN name, and VPN Label into a created attribute table of the VPN.

Manner 2: Each PE node allocates a VPN Label freely.

On the NMS, through an NMI interface, a VPN create request message is delivered to each PE node. The VPN create request message includes: a VPN ID and a VPN name.

After receiving the VPN create request, each PE node creates a VPN table, and fills the VPN ID and VPN name into a created attribute table of the VPN.

Each PE node allocates a VPN Label respectively locally, and the allocated VPN Label is filled into the created attribute table of the VPN.

Then, each PE node returns a VPN create request response to the NMS through the NMI interface. The response includes a PE Node ID, the VPN ID and the VPN Label.

After receiving the response, the NMS stores the VPN Label of each PE in the response.

Step 103: Add an interface, which is located on the local PE node and connected to a CE node belonging to the same VPN with the PE node, to the configured VPN through the NMS, that is, add the local CE node routing table entry belonging to the VPN into the configured VPN.

The foregoing is VPN configuration of the local PE node. Configuration of the remote PE node is the same as the VPN configuration process of the local PE node, that is, step 102.

It should be noted that, in the VPN configured on each remote PE node, conditions the VPN name and the VPN ID need to satisfy are that the VPN name and the VPN ID are the same as the VPN name and the VPN ID on the local PE node, and a condition the VPN Label needs to satisfy is that the VPN Labels configured on each remote PE node are different.

Each PE node configured with the VPN maintains a VPN information table, which mainly includes the following three sub-tables.

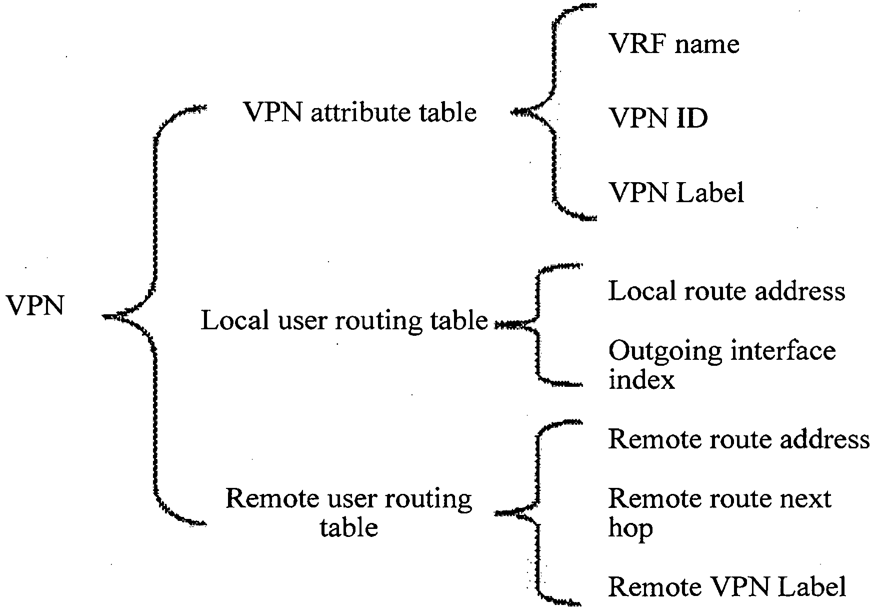

In the local CE node routing table stored in the local PE node, one or more local CE node routing table entries exist. Each local CE node routing table entry includes a local route address and outgoing interface index information.

In a remote CE node routing table stored in the remote PE node, one or more remote CE node routing table entries exist. Each remote CE node routing table entry includes a remote route address, a remote route next hop, and remote VPN Label information.

When a new local CE node route is introduced to an access link of a local PE node or a remote PE node configured with the VPN, the PE node notifies the L3VPN route controller or the NMS of the local CE node route through a message.

After the local PE node and the remote PE node are configured with the VPN, the L3VPN route controller acquires the VPN information through any one of the following manners:
1) The local PE node and the remote PE node report the VPN ID and the VPN label of each VPN configured on the local PE node and the remote PE node, and the local CE node routing table entry in the VPN to the L3VPN route controller through a configuration message actively.
2) The NMS reports the VPN ID and the VPN label of each VPN configured on the local PE node and the remote PE node and the local CE node routing table entry in the VPN to the L3VPN route controller through a configuration message or an interface actively.

In the foregoing two manners, after acquiring the local CE node routing table entry of the local PE node from the link connected to the CE node through the interior gateway protocol (interior Gateway Protocols, IGP) or by configuring a static route, the local PE node constructs a local CE node routing table entry notification message and sends it to the L3VPN route controller or the NMS. Major information fields included in the notification message are:
VPN ID: the identifier of the L3VPN, and being unique in the whole network
VPN Label: a Label allocated on the local PE and representing the VPN service
Local CE node route: a local CE node route being an IPv4 or IPv6 address;
Local PE Node ID: a local PE node Node ID being an IPv4 or IPv6 address; and
AC IF Index: an interface index for the local PE node to access the VPN, and generally being a 32-bit address.

The remote PE node reports the CE node route information of the remote PE node in the same manner with the local PE node.
3) The L3VPN route controller queries for the VPN ID and the VPN label of the VPN created on the local PE node and the local CE node routing table entry in the VPN. The L3VPN route controller queries for the VPN ID and the VPN label of the VPN created on the remote PE node.
4) The L3VPN route controller queries the NMS for the VPN ID and the VPN label of the VPN created on the local PE node and the local CE node routing table entry in the VPN. The L3VPN route controller queries the NMS for the VPN ID and the VPN label of the VPN created on the remote PE node.

After acquiring the VPN attribute information of the VPN created on the local PE node, the local CE node routing table entry in the VPN, and the VPN attribute information of each VPN configured on the remote PE node, the L3VPN route controller, according to an order of the VPN IDs in the VPN attribute information, adopts a VPN information database to save the attribute information from the VPNs created on the local PE node and the remote PE node. Each piece of VPN attribute information stored in the VPN information database includes: the VPN ID, the VPN name, a node ID list of each PE node and a VPN label list allocated by each PE node.

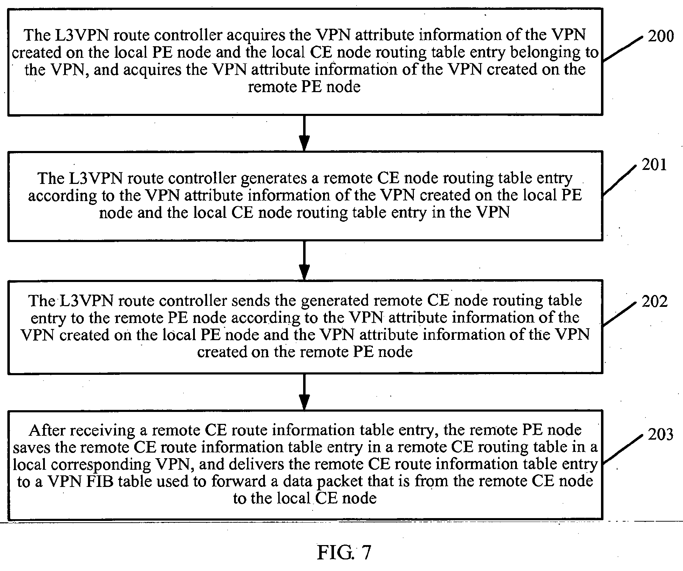

A process of implementing the L3VPN route control method in the L3VPN network system shown in FIG. 5 is illustrated with reference to FIG. 7, which is specifically as follows:
Step 200: The L3VPN route controller acquires the VPN attribute information of the VPN created on the local PE node and the local CE node routing table entry belonging to the VPN, and acquires the VPN attribute information of the VPN created on the remote PE node.
Step 201: The L3VPN route controller generates a remote CE node routing table entry according to the VPN attribute information of the VPN created on the local PE node and the local CE node routing table entry in the VPN.
Step 202: The L3VPN route controller sends the generated remote CE node routing table entry to the remote PE node according to the VPN attribute information of the VPN created on the local PE node and the VPN attribute information of the VPN created on the remote PE node.
Step 203: After receiving a remote CE route information table entry delivered by the L3VPN route controller, the remote PE node saves the remote CE route information table entry in a remote CE routing table in a local corresponding VPN, and delivers the remote CE route information table entry to a VPN FIB table used to forward a data packet that is from the remote CE node to the local CE node.

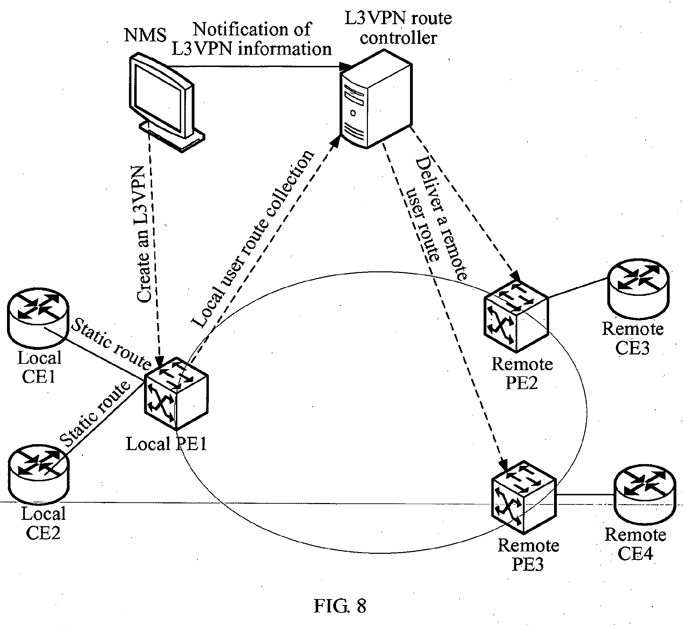

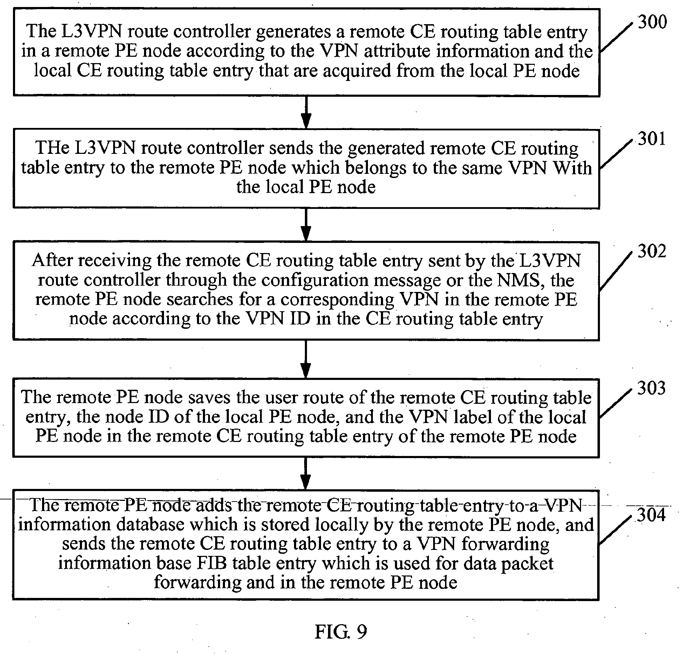

A local CE node route diffusion process is described below in detail with reference to FIG. 8 and FIG. 9. FIG. 8 is a schematic system diagram illustrating that a local CE node route diffuses in an L3VPN network system. FIG. 9 is a schematic flow chart illustrating that a local CE node route diffuses in an L3VPN network system.

After the VPN is configured on each PE node successfully through the NMS, and the L3VPN route controller acquires, through any one of the foregoing manners, the VPN information configured on the PE node, the L3VPN route controller diffuses the local CE node route in the local PE node to other remote PE nodes, the process of which is as follows:
Step 300: The L3VPN route controller generates a remote CE node routing table entry in a remote PE node according to the VPN attribute information and the local CE node routing table entry that are acquired from the local PE node.

In a specific implementation process, the L3VPN Route Controller uses a route address, which is in a local CE node routing table entry and acquired from a local PE1 node, as a route address in a remote CE node routing table entry in a remote PE2 node and a remote PE3 node, uses an node ID of the local PE1 node reporting a user route as a next hop address in the remote CE node routing table entry in the remote PE2 node and the remote PE3 node, uses a VPN label in the local PE1 node reporting the user route as a remote VPN label in the remote CE node routing table entry in the remote PE2 node and the remote PE3 node, and generates the remote CE node routing table entry corresponding to the local CE node routing table entry.

Step 301: The L3VPN route controller sends the generated remote CE node routing table entry to the remote PE node which belongs to the same VPN with the local PE node.

In a specific implementation process, the L3VPN Route Controller sends the generated remote CE node routing table entry to the remote PE2 node and the remote PE3 node, which belong to the same VPN with the local PE1 node, through a configuration message.

The L3VPN Route Controller notifies the NMS of the remote CE node routing table entry through a configuration message or the interface NMI between the L3VPN Route Controller and the NMS. The NMS sends the remote CE node routing table entry to the remote PE2 node and the remote PE3 node, which belong to the same VPN with the local PE1 node, through a configuration message or an interface between the NMS and the remote PE2 node or the remote PE3 node.

Step 302: After receiving the remote CE node routing table entry sent by the L3VPN route controller through the configuration message or the NMS, the remote PE node searches for a corresponding VPN in the remote PE node according to the VPN ID in the CE node routing table entry.

Step 303: The remote PE node saves the user route of the remote CE node routing table entry, the node ID of the local PE node, and the VPN label of the local PE node in the remote CE node routing table entry of the remote PE node.

Step 304: The remote PE node adds the remote CE node routing table entry to a VPN information database which is stored locally by the remote PE node, and sends the remote CE node routing table entry to a VPN forwarding information base FIB table entry which is used for data packet forwarding and located in the remote PE node.

After the remote PE receives a packet with the destination being the local CE node route from the remote CE node, the remote PE node may forward a packet according to remote CE node routing table entry information stored in an FIB table of the local VPN.

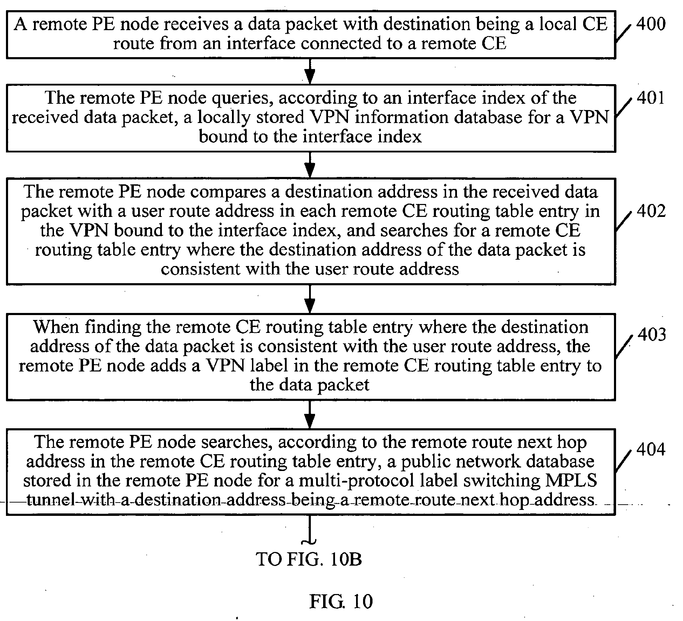

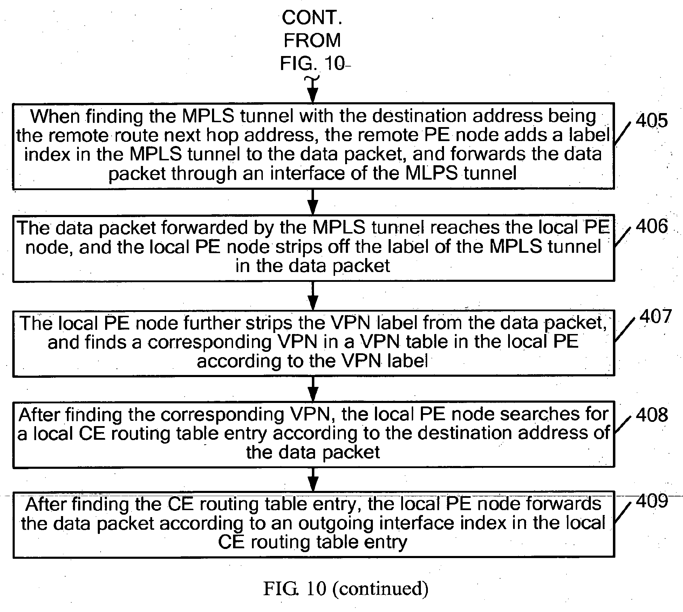

The process in which a remote CE node sends a data packet to a local CE node after the local CE node route diffusion process is completed is illustrated in the following in detail with reference to FIG. 10.

Step 400: A remote PE node receives a data packet with a destination being a local CE node route from an interface connected to a remote CE node.

Step 401: The remote PE node queries, according to an interface index of the received data packet, a locally stored VPN information database for a VPN bound to the interface index.

Step 402: The remote PE node compares a destination address in the received data packet with a user route address in each remote CE node routing table entry in the VPN bound to the interface index, and searches for a remote CE node routing table entry where the destination address of the data packet is consistent with the user route address.

Step 403: When finding the remote CE node routing table entry where the destination address of the data packet is consistent with the user route address, the remote PE node adds a VPN label in the remote CE node routing table entry to the data packet.

Step 404: The remote PE node searches, according to the remote route next hop address in the remote CE node routing table entry, a public network database stored in the remote PE node for a multi-protocol label switching MPLS tunnel with a destination address being a remote route next hop address.

Step 405: When finding the MPLS tunnel with the destination address being the remote route next hop address, the remote PE node adds an outgoing label index in the MPLS tunnel to the data packet, and forwards the data packet through an interface of the MPLS tunnel.

Step 406: The data packet forwarded by the MPLS tunnel reaches the local PE node, and the local PE node strips off the label of the MPLS tunnel in the data packet.

Step 407: The local PE node further strips the VPN label from the data packet, and finds a corresponding VPN in a VPN table in the local PE according to the VPN label.

Step 408: After finding the corresponding VPN, the local PE node searches for a local CE node routing table entry according to the destination address of the data packet.

Step 409: After finding the CE node routing table entry, the local PE node forwards the data packet according to an outgoing interface index in the local CE node routing table entry.

In the implementation of the present invention, the L3VPN route control and transfer functions are centralized in the L3VPN route controller, which simplifies route control and management of each PE node in the L3VPN, thereby greatly reducing costs of deployment and maintenance while providing an L3VPN route automatic control function.

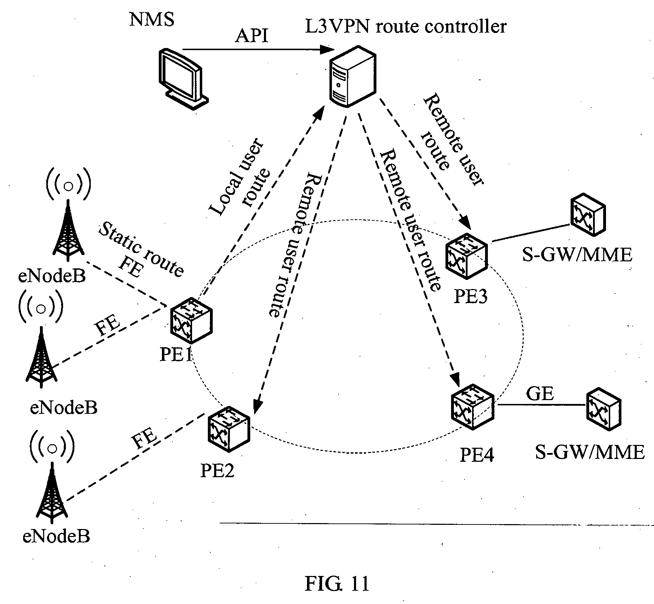

FIG. 11 is a schematic diagram of Embodiment 2 of an L3VPN network system according to an embodiment of the present invention.

In this embodiment, an implementation process is illustrated in further detail, in which a PE1 node is used as a local PE node, local route information of the PE1 node is diffused to remote PE nodes of a same VPN, and data packet forwarding is performed.

In this embodiment, a centralized L3VPN route controller is used as a functionally independent component, and is integrated into an NMS (network management server), and data interaction is performed between the L3VPN route controller and the NMS through an API.

The PE1 node is connected to an eNodeB through an interface 1 and an interface 2.

A PE2 node is connected to the eNodeB through the interface 1.

A PE3 node is connected to an S-GW/MME1 through the interface 1 and the interface 2. The S-GW/MME1 is an implementation manner of a remote CE node.

A PE4 node is connected to an S-GW/MME2 through the interface 1 and the interface 2. The S-GW/MME2 is an implementation manner of a remote CE node.

PE nodes communicate with the NMS (including the L3VPN route controller) through an NMI interface.

### Implementation steps:

1: First, an MPLS Tunnel from each PE node to other PE nodes is established through the NMS.
2: After MPLS Tunnels are created successfully, on each PE node, MPLS Tunnel information (a destination address, an interface index, an outgoing Label, a Tunnel state) with a first node being a PE Node ID of the PE node is saved in a public network database of the PE node. For example, MPLS Tunnel information from PE1 to PE2, from PE1 to PE3, and from PE1 to PE4 is saved on the PE1 node.
3: A new VPN is created on the NMS. Attribute information included in the VPN includes: a VPN name and a VPN ID. The VPN name and the VPN ID need to be unique in the whole network, and cannot be the same as other VPN names and VPN IDs.
4: The NMS delivers the created VPN attribute information (the VPN name and the VPN ID) to each PE node (PE1, PE2, PE3 and PE4) through the NMI.
5. Each PE node (PE1, PE2, PE3 and PE4) receives a VPN create request (the VPN name and the VPN ID) through the NMI interface, creates a VPN table locally, and allocates a VPN Label.
6: Each PE node returns the allocated VPN Label to the NMS through the NMI interface.
7. On the NMS, each PE interface belonging to the VPN is added to the VPN, that is, a table of the correspondence between a VPN access interface and the VPN is created. In this embodiment, access interfaces are: {PE1, interface 1}, {PE1, interface 2}, {PE3, interface 1}, and {PE4, interface 1}.
8: After the foregoing steps are completed, the NMS notifies the L3VPN route controller of the successfully created VPN information (the VPN ID, the VPN name, the VPN Label allocated by each PE node, the Node ID of each PE node, and each interface index on each PE node and belonging to the VPN) through a network management internal interface (API).
9: After receiving the VPN attribute information provided by the NMS, the L3VPN route controller saves a VPN information database of the whole network in the L3VPN route controller according to an order of the VPN IDs. Data of each L3VPN includes: the VPN ID, the VPN name, the Node ID list of the PE nodes belonging to the VPN, and the VPN Label list allocated by each PE.
10: Through the NMS, static route information is configured on the interface 1 of PE1, and the configured static route information is local CE route information of PE1.
11: The PE1 node queries the VPN corresponding to the interface according to the interface information (the interface index) in the received local CE route information through the table of the correspondence between an access interface and the VPN, constructs a new local CE routing table entry from the local CE route address, and adds the new local CE routing table entry to a local CE routing table in the VPN. The local route address in the local CE routing table entry is the local CE route address. The interface index in the local CE routing table entry is an interface configured with a static route: the interface 1.
12: The PE1 node delivers the local CE routing table entry newly added to the VPN to a data plane forwarding table in the VPN, which is used to guide data forwarding.
13: The PE1 node forms the VPN information (the VPN ID), the local CE route information (the local CE route address and the PE1 Node ID), and the local access interface (the interface 1) into a local CE route information notification message, and sends the local CE route information notification message to the L3VPN route controller through the NMI interface.
14: After receiving the local CE route information notification message of the PE1 node, the L3VPN route controller acquires from the message the VPN ID, the PE1 Node ID, the local CE route address and the local access interface: the interface 1.
15: The L3VPN route controller queries the VPN Label of PE1 in the VPN information database of the L3VPN route controller according to the VPN ID and the Node ID (PE1).
16: The L3VPN route controller forms the VPN ID, the PE1 Node ID, the VPN Label of PE1, and the local CE route information into a remote CE route information configuration message, and sends, through the NMI interface, the remote CE route information configuration message to the different remote PE nodes (PE2, PE3 and PE4) with which the PE1 node belongs to the same VPN (the VPN ID being the same).
17: After receiving the remote CE route information configuration message sent by the L3VPN route controller through the NMI interface, the remote PE nodes (PE2, PE3 and PE4) acquire the VPN ID, a route next hop (PE1 Node ID), the VPN Label, and a remote route address (the local CE route address on PE1) from the message.
18: According to the VPN ID, each remote PE (PE2, PE3, or PE4) node finds a corresponding VPN in a local VPN information table database. The VPN is already created on each PE node through the NMS in the foregoing steps, so that a VPN information table corresponding to the VPN ID can be found herein.
   The remote PE nodes (PE2, PE3 and PE4) form a remote CE routing table entry by putting together the remote route address, the route next hop (PE1 Node ID) and the VPN Label (the VPN Label of PE1), save the remote CE routing table entry in a remote CE routing table entry in an information table of the corresponding VPN (the VPN found locally through the VPN ID) in each remote PE node (PE2, PE3 and PE4) locally.
19: The remote PE (PE2, PE3 and PE4) delivers the remote CE routing table entry (including the remote CE route address, the VPN Label and the next hop address) newly added to the VPN to the corresponding VPN data plane forwarding table in each remote PE node (PE2, PE3 and PE4), which is used to guide forwarding of a VPN data stream.

After the foregoing steps are completed, the process is completed in which a local CE route of the PE1 node is diffused from the PE1 node to the remote PE2, PE3, and PE4 nodes.

When a remote S-GW/MME needs to send a packet to an eNB connected to the PE1, the process includes:
1: The S-GW/MME first sends the packet that needs to be sent to the eNB to the PE3 through an interface between the S-GW/MME and the PE3.
2: According to an interface index, interface 1, of the received packet, the PE3 node finds a VPN information table corresponding to the interface in a table of the correspondence between a local VPN access interface and the VPN.
3: The PE3 node compares a destination address in the packet with a user route address in each remote CE routing table entry in the found VPN. The found destination address is the remote CE routing table entry of the eNB.
4: The PE3 node acquires a VPN Label and a route next hop (PE1 Node ID) from a found remote CE routing table entry.
5: The PE3 node encapsulates the received packet with a layer of VPN Label.
6: The PE3 node searches a public network database for an MPLS Tunnel with a destination address being PE1. The MPLS Tunnel from PE3 to PE1 is already created, so that the MPLS Tunnel with the destination address being PE1 may be found on PE3.
7: The PE3 node adds an outgoing Label in the MPLS Tunnel to the packet, and forwards the packet from the interface of the MPLS Tunnel.
8: The packet undergoes outermost MPLS Label switching on each intermediate node according to MPLS Tunnel tunnels, and finally reaches the destination: PE1.
9: When the PE1 node receives a packet with the destination address being the PE1 node, the PE1 node first strips the outermost Label from the packet.
10. The PE1 node then strips a carried VPN Label from the packet, and finds a corresponding VPN in a local VPN table according to the VPN Label. The VPN Label is allocated by the PE1 and is unique in the PE1 node, so that the corresponding VPN can be found.
11: After finding the VPN to which the packet belongs, the PE1 node searches a local routing table of the VPN for a local CE routing table entry according to the destination address of the packet.
12. After finding the corresponding local routing table entry, the PE1 node forwards the packet according to an egress (the interface 1) in the local routing table entry.

The foregoing describes the L3VPN network system and the route control method of the L3VPN network system in detail. The following description focuses on the structure and function of the L3VPN route controller configured in the L3VPN network system.

FIG. 11 is a schematic structural diagram of Embodiment 1 of an L3VPN route controller according to an embodiment of the present invention.

The route controller in this embodiment includes:
a route acquisition module 10, configured to acquire, from a layer 3 virtual private network L3VPN, VPN attribute information of a VPN created on a local PE node and a local CE node routing table entry belonging to the VPN; and acquire VPN attribute information of a VPN created on a remote PE node in the L3VPN;
a route conversion module 11, configured to generate a remote CE node routing table entry according to the VPN attribute information of the VPN created on the local PE node and the local CE node routing table entry in the VPN; and
a route diffusion module 12, configured to send the generated remote CE node routing table entry to the remote PE node according to the VPN attribute information of the VPN created on the local PE node and the VPN attribute information of the VPN created on the remote PE node, so that the remote PE node forwards a data packet that is from a remote CE node to a local CE node.

Preferably, the L3VPN route controller further includes:
a route storage module 13, configured to: after the route acquisition module 10 acquires the VPN attribute information of the VPN created on the local PE node, the local CE node routing table entry in the VPN, and the VPN attribute information of each VPN configured on the remote PE node, adopt a VPN information database to save, according to an order of VPN IDs in the VPN attribute information, the attribute information from the VPNs created on the local PE node and the remote PE nodes; where each piece of VPN attribute information stored in the VPN information database includes: a VPN ID, a VPN name, a node ID list of each PE node and a VPN label list allocated by each PE node.

In the implementation of the L3VPN route controller provided by the present invention, the L3VPN route control and transfer functions are centralized in the L3VPN route controller, which simplifies route control and management of each PE node in the L3VPN, thereby greatly reducing costs of deployment and maintenance while providing the L3VPN route automatic control function.

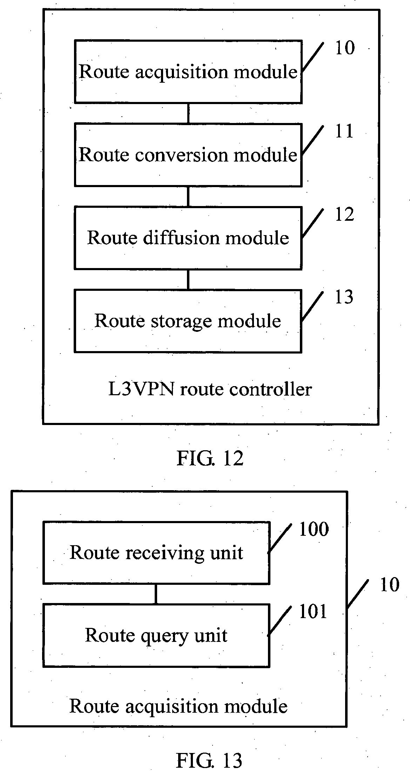

FIG. 12 is a schematic structural diagram of Embodiment 2 of an L3VPN route controller according to an embodiment of the present invention.

This embodiment focuses on the illustration of structure and function of the route acquisition module, and the route acquisition module includes:
a route receiving unit 100, configured to receive a VPN ID and a VPN label of the VPN created on the local PE node, the local CE node routing table entry in the VPN, and a VPN ID and a VPN label of the VPN created on the remote PE node, all of which are from the local PE node and the remote PE node or reported by an NMS through a message; and
a route query unit 101, configured to query the local PE node and the remote PE node or query the NMS for the VPN ID and the VPN label of the VPN created on the local PE node, the local CE node routing table entry in the VPN, and the VPN ID and the VPN label of the VPN created on the remote PE node.

FIG. 13 is a schematic structural diagram of Embodiment 3 of an L3VPN route controller according to an embodiment of the present invention.

This embodiment focuses on the illustration of structure and function of the route conversion module, and the route conversion module includes:
a route address conversion unit 110, configured to use a route address, which is in the local CE node routing table entry and acquired from the local PE node, as a route address in the remote CE node routing table entry in the remote PE node;
a node ID conversion unit 111, configured to use a node ID of the local PE node reporting a user route as a next hop address in the remote CE node routing table entry in the remote PE node;
a VPN label conversion unit 112, configured to use a VPN label of the local PE node reporting the user route as a remote VPN label in the remote CE node routing table entry in the remote PE node; and
a routing table entry generation unit 113, configured to form the remote CE node routing table entry corresponding to the local CE node routing table entry by putting together the route address, the next hop address, and the VPN label, which are converted by the route address conversion unit, the node ID conversion unit, and the VPN label conversion unit.

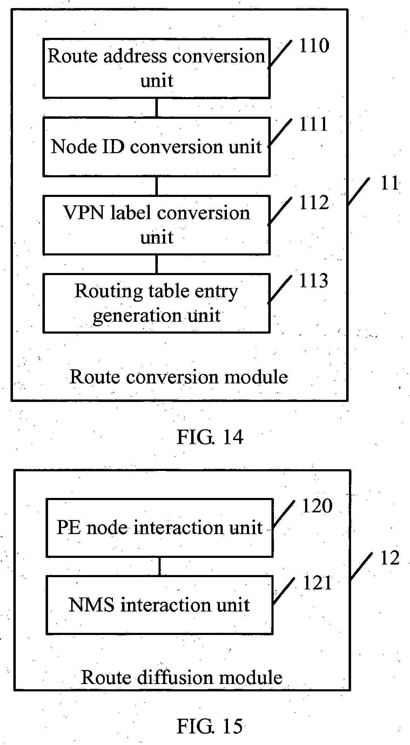

FIG. 14 is a schematic structural diagram of Embodiment 4 of an L3VPN route controller according to an embodiment of the present invention.

This embodiment focuses on the illustration of structure and function of the route diffusion module, and the route diffusion module includes:
a PE node interaction unit 120, configured to send the generated remote CE node routing table entry to the remote PE node, which belongs to the same VPN with the local PE node, through a configuration message according to the VPN ID in the VPN attribute information of the VPN on the local PE node and the VPN ID in the VPN attribute information of the VPN created on the remote PE node; and
an NMS interaction unit 121, configured to notify the NMS of the remote CE node routing table entry through a configuration message or an interface between the NMS interaction unit 121 and the NMS, where the NMS sends the generate remote CE node routing table entry to the remote PE node, which belongs to the same VPN with the local PE node, through a configuration message or an interface between the NMS and the remote PE node according to the VPN ID in the VPN attribute information of the VPN on the local PE node and the VPN ID in the VPN attribute information of the VPN created on the remote PE node.

In the implementation of the L3VPN route controller provided by the present invention, the L3VPN route control and transfer are centralized in the L3VPN route controller, which simplifies route control and management of each PE node in the L3VPN, thereby greatly reducing costs of deployment and maintenance while providing the L3VPN route automatic control function.

Through the above description of the implementation, it is clear to persons skilled in the art that the embodiments of the present invention may be accomplished through software plus a necessary universal hardware platform or through hardware. Based on this, the technical solutions according to the embodiments of the present invention or the part that makes contributions to the prior art may be embodied in the form of a software product. The computer software product is stored in a storage medium, and includes several instructions to instruct computer equipment (for example, a personal computer, a server, or network equipment) to perform the method described in the embodiments of the present invention.

The above descriptions are merely exemplary embodiments of the present invention, but are not intended to limit the claims of the present invention. Any equivalent replacement made to the claims of the present invention shall fall within the scope of the present invention.

## Claims

1. A layer 3 virtual private network route control method, wherein a layer 3 virtual private network L3VPN comprises a local customer edge device CE node, a remote CE node, a local provider edge device PE node connected to the local CE node, and a remote PE node connected to the remote CE node, and an L3VPN route controller is further deployed in the L3VPN, the method comprising:
creating a VPN for the local PE node and the remote PE node separately, wherein the local PE node and the remote PE node belong to the VPN, adding a local CE node routing table entry belonging to the VPN created on the local PE node to the VPN created on the local PE node;
acquiring (200), by the L3VPN route controller, VPN attribute information of the VPN created on the local PE node and the local CE node routing table entry belonging to the VPN, and acquiring VPN attribute information of the VPN created on the remote PE node;
generating (201), by the L3VPN route controller, a remote CE node routing table entry according to the VPN attribute information of the VPN created on the local PE node and the local CE node routing table entry in the VPN; and
sending (202), by the L3VPN route controller, a generated remote CE node routing table entry to the remote PE node according to the VPN attribute information of the VPN created on the local PE node and the VPN attribute information of the VPN created on the remote PE node, so that the remote PE node forwards a data packet that is from the remote CE node to the local CE node.

2. The layer 3 virtual private network route control method according to claim 1, wherein the creating the VPN for the local PE node and the remote PE node respectively, wherein the local PE node and the remote PE node belong to the VPN, and adding the local CE node routing table entry belonging to the VPN created on the local PE node to the VPN created on the local PE node comprises:
allocating a VPN label to the local PE node and the remote PE node respectively on a network management server NMS, wherein the local PE node and the remote PE node need to create the L3VPN;
delivering, by the NMS, a VPN create request message to the local PE node and the remote PE node through an interface between the NMS and the local PE node and an interface between the NMS and the remote PE node, wherein the VPN create request message carries a VPN ID, a VPN name, and the VPN label;
after receiving the VPN create request message, creating, by the local PE node and the remote PE node, a VPN table, and adding the VPN ID, the VPN name, and the VPN label to the VPN table; and
adding, by the NMS, the local CE node routing table entry to the VPN table created on the local PE node.

3. The layer 3 virtual private network route control method according to claim 1, wherein the creating the VPN for the local PE node and the remote PE node respectively, wherein the local PE node and the remote PE node belong to the VPN, and adding the local CE node routing table entry belonging to the VPN created on the local PE node to the VPN created on the local PE node comprises:
delivering, by a network management server NMS, a VPN create request message to the local PE node and the remote PE node through an interface between the NMS and the local PE node and an interface between the NMS and the remote PE node, wherein the VPN create request message carries a VPN ID and a VPN name;
after receiving the VPN create request message, creating, by the local PE node and the remote PE node, a VPN table respectively, allocating a VPN label, and adding the VPN ID, the VPN name, and the VPN label to the VPN table;
returning, by the local PE node and the remote PE node, a VPN create response to the NMS respectively, wherein the VPN create response carries a PE node ID of the PE node that returns the VPN create response, the VPN ID and the VPN label; and
adding, by the NMS, the local CE node routing table entry belonging to each VPN to each configured VPN respectively.

4. The layer 3 virtual private network route control method according to claim 2 or 3, wherein the acquiring, by the L3VPN route controller, the VPN attribute information of the VPN created on the local PE node and the local CE node routing table entry belonging to the VPN, and acquiring the VPN attribute information of the VPN created on the remote PE node comprises:
reporting, by the local PE node and the remote PE node, the VPN ID and the VPN label of each VPN created separately on the local and remote PE nodes and the local CE node routing table entry in the VPN, to the L3VPN route controller through a message actively; or
reporting, by the NMS, the VPN ID and the VPN label of each VPN created on the local PE node and the remote PE node and the local CE node routing table entry in the VPN, to the L3VPN route controller through a message or an interface actively; or
querying, by the L3VPN route controller, for the VPN ID and the VPN label of the VPN created on the local PE node and the local CE node routing table entry in the VPN, and querying, by the L3VPN route controller, the VPN ID and the VPN label of the VPN created on the remote PE node; or
querying, by the L3VPN route controller, the NMS for the VPN ID and the VPN label of the VPN created on the local PE node and the local CE node routing table entry in the VPN; and querying, by the L3VPN route controller, the NMS for the VPN ID and the VPN label of the VPN created on the remote PE node.

5. The layer 3 virtual private network route control method according to claim 2 or 3, wherein the generating, by the L3VPN route controller, the remote CE node routing table entry according to the VPN attribute information of the VPN created on the local PE node and the local CE node routing table entry in the VPN comprises:
using, by the L3VPN route controller, a route address which is in the local CE node routing table entry and acquired from the local PE node, as a route address in the remote CE node routing table entry in the remote PE node, using a node ID of the local PE node reporting a user route as a next hop address in the remote CE node routing table entry in the remote PE node, using the VPN label in the local PE node reporting the user route as a remote VPN label in the remote CE node routing table entry in the remote PE node, and generating the remote CE node routing table entry corresponding to the local CE node routing table entry.

6. The layer 3 virtual private network route control method according to claim 2 or 3, wherein the sending, by the L3VPN route controller, the generated remote CE node routing table entry to the remote PE node according to the VPN attribute information of the VPN created on the local PE node and the VPN attribute information of the VPN created on the remote PE node comprises:
sending, by the L3VPN route controller, the generated remote CE node routing table entry to the remote PE node, which belongs to a same VPN with the local PE node, through a configuration message according to the VPN ID in the VPN attribute information of the VPN on the local PE node and the VPN ID in the VPN attribute information of the VPN created on the remote PE node; or
notifying, by the L3VPN route controller, the NMS of the remote CE node routing table entry through a configuration message or an interface between the L3VPN route controller and the NMS, wherein the NMS sends the remote CE node routing table entry to the remote PE node, which belongs to the same VPN with the local PE node, through a configuration message or an interface between the NMS and the remote PE node according to the VPN ID in the VPN attribute information of the VPN on the local PE node and the VPN ID in the VPN attribute information of the VPN created on the remote PE node.

7. The layer 3 virtual private network route control method according to claim 6, wherein after the sending, by the L3VPN route controller, the generated remote CE node routing table entry to the remote PE node according to the VPN attribute information of the VPN created on the local PE node and the VPN attribute information of the VPN created on the remote PE node, the method comprises:
after receiving the remote CE node routing table entry sent by the L3VPN route controller through the configuration message or the NMS, searching, by the remote PE node, for a corresponding VPN in the remote PE node according to the VPN ID in the CE node routing table entry;
saving, by the remote PE node, a user route of the remote CE node routing table entry, the node ID of the local PE node, and the VPN label of the local PE node in the remote CE node routing table entry of the remote PE node; and
adding, by the remote PE node, the remote CE node routing table entry to a VPN information database which is stored locally by the remote PE node, and sending the remote CE node routing table entry to a VPN forwarding information base FIB table entry which is used for data packet forwarding and located in the remote PE node.

8. The layer 3 virtual private network route control method according to claim 2 or 3, wherein the forwarding, by the remote PE node, the data packet that is from the remote CE node to the local CE node comprises:
receiving, by the remote PE node, the data packet with a destination being a local CE node route from an interface connected to the remote CE node;
querying, by the remote PE node and according to an interface index of the received data packet, a locally stored VPN information database for a VPN bound to the interface index;
comparing, by the remote PE node, a destination address in the received data packet with a user route address in each remote CE node routing table entry in the VPN bound to the interface index, and searching for a remote CE node routing table entry where a destination address of the data packet is consistent with the user route address;
when finding that the remote CE node routing table entry where the destination address of the data packet is consistent with the user route address, adding, by the remote PE node, a VPN label in the remote CE node routing table entry to the data packet;
searching, by the remote PE node and according to a remote route next hop address in the remote CE node routing table entry, a public network database stored by the remote PE node for a multi-protocol label switching MPLS tunnel with a destination address being a remote route next hop address; and
when finding the MPLS tunnel with the destination address being the remote route next hop address, adding, by the remote PE node, an outgoing label index in the MPLS tunnel to the data packet, and forwarding the data packet through an outgoing interface of the MPLS tunnel.

9. The layer 3 virtual private network route control method according to claim 8, wherein the forwarding, by the remote PE node, the data packet that is from the remote CE node to the local CE node further comprises:
the data packet, which is forwarded through the MPLS tunnel, reaching the local PE node, and stripping off, by the local PE node, a label of the MPLS tunnel in the data packet;
stripping, by the local PE node, the VPN label from the data packet, and finding a corresponding VPN in a VPN table in the local PE according to the VPN label;
after finding the corresponding VPN, searching, by the local PE node, for a local CE node routing table entry according to the destination address of the data packet; and
after finding the CE node routing table entry, forwarding, by the local PE node, the data packet according to an outgoing interface index in the local CE node routing table entry.

10. A layer 3 virtual private network route controller, comprising:
a route acquisition module (10), configured to acquire, from a layer 3 virtual private network L3VPN, VPN attribute information of a VPN created on a local PE node and a local CE node routing table entry belonging to the VPN; and acquire VPN attribute information of a VPN created on a remote PE node in the L3VPN;
a route conversion module (11), configured to generate a remote CE node routing table entry according to the VPN attribute information of the VPN created on the local PE node and the local CE node routing table entry in the VPN; and
a route diffusion module (12), configured to send the generated remote CE node routing table entry to the remote PE node according to the VPN attribute information of the VPN created on the local PE node and the VPN attribute information of the VPN created on the remote PE node, so that the remote PE node forwards a data packet that is from a remote CE node to a local CE node.

11. The layer 3 virtual private network route controller according to claim 10, wherein the route acquisition module comprises:
a route receiving unit (100), configured to receive a VPN ID and a VPN label of the VPN created on the local PE node, the local CE node routing table entry in the VPN, and a VPN ID and a VPN label of the VPN created on the remote PE node, all of which are from the local PE node and the remote PE node or reported by an NMS through a message; and
a route query unit (101), configured to query the local PE node and the remote PE node or query the NMS for the VPN ID and the VPN label of the VPN created on the local PE node, the local CE node routing table entry in the VPN, and the VPN ID and the VPN label of the VPN created on the remote PE node.

12. The layer 3 virtual private network route controller according to claim 10, wherein the L3VPN route controller further comprises:
a route storage module (13), configured to: after the route acquisition module acquires the VPN attribute information of the VPN created on the local PE node, the local CE node routing table entry in the VPN, and the VPN attribute information of each VPN configured on the remote PE node, adopt a VPN information database to save, according to an order of VPN IDs in the VPN attribute information, attribute information from the VPNs created on the local PE node and the remote PE node; wherein each piece of VPN attribute information stored in the VPN information database comprises: a VPN ID, a VPN name, a node ID list of each PE node and a VPN label list allocated by each PE node.

13. The layer 3 virtual private network route controller according to claim 10, wherein the route conversion module comprises:
a route address conversion unit (110), configured to use a route address, which is in the local CE node routing table entry and acquired from the VPN created on the local PE node, as a route address in the remote CE node routing table entry in the remote PE node;
a node ID conversion unit (111), configured to use a node ID of the local PE node reporting a user route as a next hop address in the remote CE node routing table entry in the remote PE node;
a VPN label conversion unit (112), configured to use a VPN label of the local PE node reporting the user route as a remote VPN label in the remote CE node routing table entry in the remote PE node; and
a routing table entry generation unit (113), configured to form the remote CE node routing table entry corresponding to the local CE node routing table entry by putting together the route address, the next hop address, and the VPN label, which are converted by the route address conversion unit, the node ID conversion unit, and the VPN label conversion unit.

14. The layer 3 virtual private network route controller according to any one of claims 10 to 13, wherein the route diffusion module comprises:
a PE node interaction unit (120), configured to send the generated remote CE node routing table entry to the remote PE node, which belongs to a same VPN with the local PE node, through a configuration message according to the VPN ID in the VPN attribute information of the VPN on the local PE node and the VPN ID in the VPN attribute information of the VPN created on the remote PE node; and
an NMS interaction unit (121), configured to notify the NMS of the remote CE node routing table entry through a configuration message or an interface between the NMS interaction unit and the NMS, wherein the NMS sends the generate remote CE node routing table entry to the remote PE node, which belongs to the same VPN with the local PE node, through a configuration message or an interface between the NMS and the remote PE node according to the VPN ID in the VPN attribute information of the VPN on the local PE node and the VPN ID in the VPN attribute information of the VPN created on the remote PE node.

## Patentansprüche

1. Routing-Steuerverfahren für ein virtuelles privates Schicht-3-Netzwerk, wobei ein virtuelles privates Schicht-3-Netzwerk (L3VPN) einen lokalen Kunden-Kanten-vorrichtungs(CE)-Knoten, einen entfernten CE-Knoten, einen lokalen Anbieter-Kantenvorrichtungs(PE)-Knoten, der mit dem lokalen CE-Knoten verbunden ist, und einen entfernten PE-Knoten aufweist, der mit dem entfernten CE-Knoten verbunden ist, und ferner ein L3VPN-Routenkontroller im L3VPN eingesetzt wird, wobei das Verfahren die folgenden Schritte aufweist:
getrenntes Anlegen eines VPN für den lokalen PE-Knoten und den entfernten PE-Knoten, wobei der lokale PE-Knoten und der entfernte PE-Knoten zum VPN gehören, Hinzufügen eines lokalen CE-Knoten-Routing-Tabelleneintrags, der zum am lokalen PE-Knoten angelegten VPN gehört, zum am lokalen PE-Knoten angelegten VPN;
Erfassen (200) durch den L3VPN-Routenkontroller von VPN-Attributinformationen des am lokalen PE-Knoten angelegten VPN und des lokalen CE-Knoten-Routing-Tabelleneintrags, der zum VPN gehört, und Erfassen von VPN-Attributinformationen des am entfernten PE-Knoten angelegten VPN;
Erzeugen (201) durch den L3VPN-Routenkontroller eines entfernten CE-Knoten-Routing-Tabelleneintrags entsprechend den VPN-Attributinformationen des am lokalen PE-Knoten angelegten VPN und dem lokalen CE-Knoten-Routing-Tabelleneintrag im VPN; und
Senden (202) durch den L3VPN-Routenkontroller eines erzeugten entfernten CE-Knoten-Routing-Tabelleneintrags an den entfernten PE-Knoten entsprechend den VPN-Attributinformationen des am lokalen PE-Knoten angelegten VPN und den VPN-Attributinformationen des am entfernten PE-Knoten angelegten VPN, so dass der entfernte PE-Knoten ein Datenpaket, das vom entfernten CE-Knoten stammt, zum lokalen CE-Knoten weiterleitet.

2. Routing-Steuerverfahren für ein virtuelles privates Schicht-3-Netzwerk nach Anspruch 1, wobei das jeweilige Anlegen des VPN für den lokalen PE-Knoten und den entfernten PE-Knoten, wobei der lokale PE-Knoten und der entfernte PE-Knoten zum VPN gehören, und das Hinzufügen des lokalen CE-Knoten-Routing-Tabelleneintrags, der zum am lokalen PE-Knoten angelegten VPN gehört, zum am lokalen PE-Knoten angelegten VPN aufweist:
Zuteilen eines VPN-Labels jeweils zum lokalen PE-Knoten und zum entfernten PE-Knoten an einem Netzwerk-Verwaltungsserver (NMS), wobei der lokale PE-Knoten und der entfernte PE-Knoten das L3VPN anlegen müssen;
Liefern durch den NMS einer Anforderungsnachricht zum Anlegen eines VPN an den lokalen PE-Knoten und den entfernten PE-Knoten durch eine Schnittstelle zwischen dem NMS und dem lokalen PE-Knoten und eine Schnittstelle zwischen dem NMS und dem entfernten PE-Knoten, wobei die Anforderungsnachricht zum Anlegen eines VPN eine VPN-ID, einen VPN-Namen und das VPN-Label befördert;
nach dem Empfangen der Anforderungsnachricht zum Anlegen eines VPN Erzeugen durch den lokalen PE-Knoten und den entfernten PE-Knoten einer VPN-Tabelle, und Hinzufügen der VPN-ID, des VPN-Namens und des VPN-Labels zur VPN-Tabelle; und
Hinzufügen durch den NMS des lokalen CE-Knoten-Routing-Tabelleneintrags zur am lokalen PE-Knoten erzeugten VPN-Tabelle.

3. Routing-Steuerverfahren für ein virtuelles privates Schicht-3-Netzwerk nach Anspruch 1, wobei das jeweilige Anlegen des VPN für den lokalen PE-Knoten und den entfernten PE-Knoten, wobei der lokale PE-Knoten und der entfernte PE-Knoten zum VPN gehören, und das Hinzufügen des lokalen CE-Knoten-Routing-Tabelleneintrags, der zum am lokalen PE-Knoten angelegten VPN gehört, zum am lokalen PE-Knoten angelegten VPN aufweist:
Liefern durch einen Netzwerk-Verwaltungsserver NMS einer Anforderungsnachricht zum Anlegen eines VPN an den lokalen PE-Knoten und den entfernten PE-Knoten durch eine Schnittstelle zwischen dem NMS und dem lokalen PE-Knoten und eine Schnittstelle zwischen dem NMS und dem entfernten PE-Knoten, wobei die Anforderungsnachricht zum Anlegen eines VPN eine VPN-ID und einen VPN-Namen befördert;
nach Empfangen der Anforderungsnachricht zum Anlegen eines VPN jeweiliges Erzeugen durch den lokalen PE-Knoten und den entfernten PE-Knoten einer VPN-Tabelle, Zuteilen eines VPN-Labels und Hinzufügen der VPN-ID, des VPN-Namens und des VPN-Labels zur VPN-Tabelle;
Zurückschicken jeweils durch den lokalen PE-Knoten und den entfernten PE-Knoten einer Antwort der Anlage eines VPN an den NMS, wobei die Antwort der Anlage eines VPN eine PE-Knoten-ID des PE-Knotens, der die Antwort der Anlage eines VPN zurückschickt, die VPN-ID und das VPN-Label befördert; und
Hinzufügen durch den NMS des lokalen CE-Knoten-Routing-Tabelleneintrags, der zu jedem VPN gehört, zu jeweils jedem konfigurierten VPN.

4. Routing-Steuerverfahren für ein virtuelles privates Schicht-3-Netzwerk nach Anspruch 2 oder 3, wobei das Erfassen durch den L3VPN-Routenkontroller der VPN-Attributinformationen des am lokalen PE-Knoten angelegten VPN und des lokalen CE-Knoten-Routing-Tabelleneintrags, der zum VPN gehört, und das Erfassen der VPN-Attributinformationen des am entfernten PE-Knoten angelegten VPN aufweist:
aktives Melden durch den lokalen PE-Knoten und den entfernten PE-Knoten der VPN-ID und des VPN-Labels von jedem getrennt am lokalen und entfernten PE-Knoten angelegten VPN und des lokalen CE-Knoten-Routing-Tabelleneintrags im VPN an den L3VPN-Routenkontroller durch eine Nachricht; oder
aktives Melden durch den NMS der VPN-ID und des VPN-Labels von jedem am lokalen PE-Knoten und am entfernten-PE-Knoten angelegten VPN und des lokalen CE-Knoten-Routing-Tabelleneintrags im VPN an den L3VPN-Routenkontroller durch eine Nachricht oder eine Schnittstelle; oder
Abfragen durch den L3VPN-Routenkontroller der VPN-ID und des VPN-Labels des am lokalen PE-Knoten angelegten VPN und des lokalen CE-Knoten-Routing-Tabelleneintrags im VPN, und Abfragen durch den L3VPN-Routenkontroller der VPN-ID und des VPN-Labels des am entfernten PE-Knoten angelegten VPN; oder
Abfragen durch den L3VPN-Routenkontroller am NMS der VPN-ID und des VPN-Labels des am lokalen PE-Knoten angelegten VPN und des lokalen CE-Knoten-Routing-Tabelleneintrags im VPN; und Abfragen durch den L3VPN-Routenkontroller am NMS der VPN-ID und des VPN-Labels des am entfernten PE-Knoten angelegten VPN.

5. Routing-Steuerverfahren für ein virtuelles privates Schicht-3-Netzwerk nach Anspruch 2 oder 3, wobei das Erzeugen durch den L3VPN-Routenkontroller des entfernten CE-Knoten-Routing-Tabelleneintrags entsprechend den VPN-Attributinformationen des am lokalen PE-Knoten angelegten VPN und des lokalen CE-Knoten-Routing-Tabelleneintrags im VPN aufweist:
Verwenden durch den L3VPN-Routenkontroller einer Routenadresse, die sich im lokalen CE-Knoten-Routing-Tabelleneintrag befindet und vom lokalen PE-Knoten erfasst wird, als eine Routenadresse im entfernten CE-Knoten-Routing-Tabelleneintrag im entfernten PE-Knoten, Verwenden einer Knoten-ID des lokalen PE-Knotens, der eine Benutzerroute meldet, als eine Adresse des nächsten Hop im entfernten CE-Knoten-Routing-Tabelleneintrag im entfernten PE-Knoten, Verwenden des VPN-Labels im lokalen PE-Knoten, der die Benutzerroute meldet, als ein entferntes VPN-Label im entfernten CE-Knoten-Routing-Tabelleneintrag im entfernten PE-Knoten und Erzeugen des entfernten CE-Knoten-Routing-Tabelleneintrags, der dem lokalen CE-Knoten-Routing-Tabelleneintrag entspricht.

6. Routing-Steuerverfahren für ein virtuelles privates Schicht-3-Netzwerk nach Anspruch 2 oder 3, wobei das Senden durch den L3VPN-Routenkontroller des erzeugten entfernten CE-Knoten-Routing-Tabelleneintrag an den entfernten PE-Knoten entsprechend den VPN-Attributinformationen des am lokalen PE-Knoten angelegten VPN und den VPN-Attributinformationen des am entfernten PE-Knoten angelegten VPN aufweist:
Senden durch den L3VPN-Routenkontroller des erzeugten entfernten CE-Knoten-Routing-Tabelleneintrags an den entfernten PE-Knoten, der zu einem selben VPN mit dem lokalen PE-Knoten gehört, durch eine Konfigurationsnachricht entsprechend der VPN-ID in den VPN-Attributinformationen des VPN am lokalen PE-Knoten und der VPN-ID in den VPN-Attributinformationen des am entfernten PE-Knoten angelegten VPN; oder
Benachrichtigen durch den L3VPN-Routenkontroller des NMS vom entfernten CE-Knoten-Routing-Tabelleneintrag durch eine Konfigurationsnachricht oder eine Schnittstelle zwischen dem L3VPN-Routenkontroller und dem NMS,
wobei der NMS den entfernten CE-Knoten-Routing-Tabelleneintrag an den entfernten PE-Knoten, der zum selben VPN mit dem lokalen PE-Knoten gehört, durch eine Konfigurationsnachricht oder eine Schnittstelle zwischen dem NMS und dem entfernten PE-Knoten entsprechend der VPN-ID in den VPN-Attributinformationen des VPN am lokalen PE-Knoten und der VPN-ID in den VPN- Attributinformationen des am entfernten PE-Knoten angelegten VPN sendet.

7. Routing-Steuerverfahren für ein virtuelles privates Schicht-3-Netzwerk nach Anspruch 6, wobei nach dem Senden durch den L3VPN-Routenkontroller des erzeugten entfernten CE-Knoten-Routing-Tabelleneintrags an den entfernten PE-Knoten entsprechend den VPN-Attributinformationen des am lokalen PE-Knoten angelegten VPN und den VPN-Attributinformationen des am entfernten PE-Knoten angelegten VPN, das Verfahren aufweist:
nach dem Empfangen des entfernten CE-Knoten-Routing-Tabelleneintrags, der durch den L3VPN-Routenkontroller durch die Konfigurationsnachricht oder den NMS gesendet wird, Suchen durch den entfernten PE-Knoten nach einem entsprechenden VPN im entfernten PE-Knoten entsprechend der VPN-ID im CE-Knoten-Routing-Tabelleneintrag;
Speichern durch den entfernten PE-Knoten einer Benutzerroute des entfernten CE-Knoten-Routing-Tabelleneintrags, der Knoten-ID des lokalen PE-Knotens und des VPN-Labels des lokalen PE-Knotens im entfernten CE-Knoten-Routing-Tabelleneintrag des entfernten PE-Knotens; und
Hinzufügen durch den entfernten PE-Knoten des entfernten CE-Knoten-Routing-Tabelleneintrags zu einer VPN-Informationsdatenbank, die durch den entfernten PE-Knoten lokal gespeichert wird, und Senden des entfernten CE-Knoten-Routing-Tabelleneintrags zu einem VPN-Weiterleitungsinformationsbasis(FIB)-Tabelleneintrag, der zur Datenpaketweiterleitung verwendet wird und sich im entfernten PE-Knoten befindet.

8. Routing-Steuerverfahren für ein virtuelles privates Schicht-3-Netzwerk nach Anspruch 2 oder 3, wobei das Weiterleiten durch den entfernten PE-Knoten des Datenpakets, das vom entfernten CE-Knoten stammt, zum lokalen CE-Knoten aufweist:
Empfangen durch den entfernten PE-Knoten des Datenpakets mit einem Ziel, das eine lokale CE-Knotenroute von einer Schnittstelle ist, die mit dem entfernten CE-Knoten verbunden ist;
Abfragen durch den entfernten PE-Knoten und entsprechend einem Schnittstellenindex des empfangenen Datenpakets einer lokal gespeicherten VPN-Informationsdatenbank für ein VPN, das an den Schnittstellenindex gebunden ist;
Vergleichen durch den entfernten PE-Knoten einer Zieladresse im empfangenen Datenpaket mit einer Benutzerroutenadresse in jedem entfernten CE-Knoten-Routing-Tabelleneintrag im VPN, das an den Schnittstellenindex gebunden ist, und Suchen nach einem entfernten CE-Knoten-Routing-Tabelleneintrag, wo eine Zieladresse des Datenpakets mit der Benutzerroutenadresse übereinstimmt;
wenn der entfernte CE-Knoten-Routing-Tabelleneintrag gefunden wird, wo die Zieladresse des Datenpakets mit der Benutzerroutenadresse übereinstimmt, Hinzufügen durch den entfernten PE-Knoten eines VPN-Labels im entfernten CE-Knoten-Routing-Tabelleneintrag zum Datenpaket;
Durchsuchen durch den entfernten PE-Knoten und entsprechend einer entfernten Routenadresse des nächsten Hop im entfernten CE-Knoten-Routing-Tabelleneintrag einer öffentlichen Netzwerkdatenbank, die durch den entfernten PE-Knoten gespeichert ist, nach einem "Multi-Protocol Label Switching"(MPLS)-Tunnel mit einer Zieladresse, die eine entfernte Routenadresse des nächsten Hop ist; und
wenn der MPLS-Tunnel mit einer Zieladresse gefunden wird, die eine entfernte Routenadresse des nächsten Hop ist, Hinzufügen durch den entfernten PE-Knoten eines Ausgangslabelindex im MPLS-Tunnel zum Datenpaket und Weiterleiten des Datenpakets durch eine Ausgangsschnittstelle des MPLS-Tunnels.

9. Routing-Steuerverfahren für ein virtuelles privates Schicht-3-Netzwerk nach Anspruch 8, wobei das Weiterleiten durch den entfernten PE-Knoten des Datenpakets, das vom entfernten CE-Knoten stammt, zum lokalen CE-Knoten ferner aufweist:
Ankommen des Datenpakets, das durch den MPLS-Tunnel weitergeleitet wird, am lokalen PE-Knoten und Abstreifen durch den lokalen PE-Knoten eines Labels des MPLS-Tunnels im Datenpaket;
Abstreifen durch den lokalen PE-Knoten des VPN-Labels vom Datenpaket, und Finden eines entsprechenden VPN in einer VPN-Tabelle im lokalen PE entsprechend dem VPN-Label;
nach dem Finden des entsprechenden VPN, Suchen durch den lokalen PE-Knoten nach einem lokalen CE-Knoten-Routing-Tabelleneintrag entsprechend der Zieladresse des Datenpakets; und
nach dem Finden des CE-Knoten-Routing-Tabelleneintrags Weiterleiten durch den lokalen PE-Knoten des Datenpakets entsprechend einem Ausgangsschnittstellenindex im lokalen CE-Knoten-Routing-Tabelleneintrag.

10. Routenkontroller für ein virtuelles privates Schicht-3-Netzwerk, der Folgendes aufweist:
ein Routenerfassungsmodul (10), das konfiguriert ist, aus einem virtuellen privaten Schicht-3-Netzwerk (L3VPN) VPN-Attributinformationen eines an einem lokalen PE-Knoten angelegten VPN und einen lokalen CE-Knoten-Routing-Tabelleneintrag zu erfassen, der zum VPN gehört; und VPN-Attributinformationen eines an einem entfernten PE-Knoten angelegten VPN im L3VPN zu erfassen;
ein Routenumwandlungsmodul (11), das konfiguriert ist, einen entfernten CE-Knoten-Routing-Tabelleneintrag entsprechend den VPN-Attributinformationen des am lokalen PE-Knoten angelegten VPN und dem lokalen CE-Knoten-Routing-Tabelleneintrag im VPN zu erzeugen; und
ein Routenverbreitungsmodul (12), das konfiguriert ist, den erzeugten entfernten CE-Knoten-Routing-Tabelleneintrag zum entfernten PE-Knoten entsprechend den VPN-Attributinformationen des am lokalen PE-Knoten angelegten VPN und den VPN-Attributinformationen des am entfernten PE-Knoten angelegten VPN zu senden, so dass der entfernte PE-Knoten ein Datenpaket, das von einem entfernten CE-Knoten stammt, zu einem lokalen CE-Knoten weiterleitet.

11. Routenkontroller für ein virtuelles privates Schicht-3-Netzwerk nach Anspruch 10, wobei das Routenerfassungsmodul aufweist:
eine Routenempfangseinheit (100), die konfiguriert ist, eine VPN-ID und ein VPN-Label des am lokalen PE-Knoten angelegten VPN, den lokalen CE-Knoten-Routing-Tabelleneintrag im VPN und eine VPN-ID und ein VPN-Label des am entfernten PE-Knoten angelegten VPN zu empfangen, von denen alle vom lokalen PE-Knoten und dem entfernten PE-Knoten stammen oder durch einen NMS durch eine Nachricht gemeldet werden; und
eine Routenabfrageeinheit (101), die konfiguriert ist, den lokalen PE-Knoten und den entfernten PE-Knoten oder den NMS nach der VPN-ID und dem VPN-Label des am lokalen PE-Knoten angelegten VPN, dem lokalen CE-Knoten-Routing-Tabelleneintrag im VPN und der VPN-ID und dem VPN-Label des am entfernten PE-Knoten angelegten VPN abzufragen.

12. Routenkontroller für ein virtuelles privates Schicht-3-Netzwerk nach Anspruch 10, wobei der L3VPN-Routenkontroller ferner aufweist:
ein Routenspeichermodul (13), das konfiguriert ist, nachdem das Routenerfassungsmodul die VPN-Attributinformationen des am lokalen PE-Knoten angelegten VPN, den lokalen CE-Knoten-Routing-Tabelleneintrag im VPN und die VPN-Attributinformationen jedes VPN erfasst, das am entfernten PE-Knoten konfiguriert ist, eine VPN-Informationsdatenbank anzuwenden, um entsprechend einer Reihenfolge der VPN-IDs in den VPN-Attributinformationen Attributinformationen aus den am lokalen PE-Knoten und am entfernten PE-Knoten angelegten VPNs zu speichern;
wobei jede in der VPN-Informationsdatenbank gespeicherte VPN-Attributinformation aufweist: eine VPN-ID, einen VPN-Namen, eine Knoten-ID-Liste von jedem PE-Knoten und eine VPN-Labelliste, die durch jeden PE-Knoten zugeteilt ist.

13. Routenkontroller für ein virtuelles privates Schicht-3-Netzwerk nach Anspruch 10, wobei das Routenumwandlungsmodul aufweist:
eine Routenadressen-Umwandlungseinheit (110), die konfiguriert ist, eine Routenadresse, die sich im lokalen CE-Knoten-Routing-Tabelleneintrag befindet und von dem am lokalen PE-Knoten angelegten VPN erfasst wird, als eine Routenadresse im entfernten CE-Knoten-Routing-Tabelleneintrag im entfernten PE-Knoten zu verwenden;
eine Knoten-ID Umwandlungseinheit (111), die konfiguriert ist, eine Knoten-ID des lokalen PE-Knotens, der eine Benutzerroute meldet, als eine Adresse des nächsten Hop im entfernten CE-Knoten-Routing-Tabelleneintrag im entfernten PE-Knoten zu verwenden;
eine VPN-Label-Umwandlungseinheit (112), die konfiguriert ist, ein VPN-Label des lokalen PE-Knotens, der die Benutzerroute meldet, als ein entferntes VPN-Label im entfernten CE-Knoten-Routing-Tabelleneintrag im entfernten PE-Knoten zu verwenden; und
eine Routing-Tabelleneintragserzeugungseinheit (113), die konfiguriert ist, den entfernten CE-Knoten-Routing-Tabelleneintrag, der dem lokalen CE-Knoten-Routing-Tabelleneintrag entspricht, durch Zusammensetzen der Routenadresse, der Adresse des nächsten Hop und des VPN-Labels zu bilden, die durch die Routenadressen-Umwandlungseinheit, die Knoten-ID-Umwandlungseinheit und die VPN-Label-Umwandlungseinheit umgewandelt werden.

14. Routenkontroller für ein virtuelles privates Schicht-3-Netzwerk nach einem der Ansprüche 10 bis 13, wobei das Routenverbreitungsmodul aufweist:
eine PE-Knoten-Interaktionseinheit (120), die konfiguriert ist, den erzeugten entfernten CE-Knoten-Routing-Tabelleneintrag an den entfernten PE-Knoten, der zu einem selben VPN mit dem lokalen PE-Knoten gehört, durch eine Konfigurationsnachricht entsprechend der VPN-ID in den VPN-Attributinformationen des VPN am lokalen PE-Knoten und der VPN-ID in den VPN-Attributinformationen des am entfernten PE-Knoten angelegten VPN zu senden; und
eine NMS-Inferaktionseinheit (121), die konfiguriert ist, den NMS vom entfernten CE-Knoten-Routing-Tabelleneintrag durch eine Konfigurationsnachricht oder eine Schnittstelle zwischen der NMS-Interaktionseinheit und dem NMS zu benachrichtigen, wobei der NMS den erzeugten entfernten CE-Knoten-Routing-Tabelleneintrag an den entfernten PE-Knoten, der zum selben VPN mit dem lokalen PE-Knoten gehört, durch eine Konfigurationsnachricht oder eine Schnittstelle zwischen dem NMS und dem entfernten PE-Knoten entsprechend der VPN-ID in den VPN-Attributinformationen des VPN am lokalen PE-Knoten und der VPN-ID in den VPN-Attributinformationen des am entfernten PE-Knoten angelegten VPN sendet.

## Revendications

1. Procédé de commande de route de réseau privé virtuel de couche 3, dans lequel un réseau privé virtuel de couche 3 L3VPN comprend un noeud de périphérique limitrophe client CE local, un noeud CE distant, un noeud de périphérique limitrophe fournisseur PE local connecté au noeud CE local, et un noeud PE distant connecté au noeud CE distant, et dans lequel un contrôleur de route L3VPN est en outre déployé dans le réseau L3VPN, le procédé comprenant :
la création d'un réseau VPN pour le noeud PE local et le noeud PE distant séparément, le noeud PE local et le noeud PE distant appartenant au réseau VPN, l'ajout d'une entrée de table de routage de noeud CE local appartenant au réseau VPN créé sur le noeud PE local au réseau VPN créé sur le noeud PE local ;
l'acquisition (200), par le contrôleur de route L3VPN, d'informations d'attributs VPN du réseau VPN créé sur le noeud PE local et de l'entrée de table de routage de noeud CE local appartenant au réseau VPN, et l'acquisition d'informations d'attributs VPN du réseau VPN créé sur le noeud PE distant ;
la génération (201), par le contrôleur de route L3VPN, d'une entrée de table de routage de noeud CE distant en fonction des informations d'attributs VPN du réseau VPN créé sur le noeud PE local et de l'entrée de table de routage de noeud CE local dans le réseau VPN ; et
l'envoi (202), par le contrôleur de route L3VPN, d'une entrée de table de routage de noeud CE distant générée au noeud PE distant en fonction des informations d'attributs VPN du réseau VPN créé sur le noeud PE local et des informations d'attributs VPN du réseau VPN créé sur le noeud PE distant, de telle sorte que le noeud PE distant achemine un paquet de données provenant du noeud CE distant jusqu'au noeud CE local.

2. Procédé de commande de route de réseau privé virtuel de couche 3 selon la revendication 1, dans lequel la création du réseau VPN pour le noeud PE local et le noeud PE distant respectivement, le noeud PE local et le noeud PE distant appartenant au réseau VPN, et l'ajout de l'entrée de table de routage de noeud CE local appartenant au réseau VPN créé sur le noeud PE local au réseau VPN créé sur le noeud PE local comprennent :
l'attribution d'une étiquette de réseau VPN au noeud PE local et au noeud PE distant respectivement sur un serveur de gestion de réseau, NMS, dans lequel le noeud PE local et le noeud PE distant doivent créer le réseau L3VPN ;
la délivrance, par le serveur NMS, d'un message de requête de création de réseau VPN au noeud PE local et au noeud PE distant par le biais d'une interface entre le serveur NMS et le noeud PE local et d'une interface entre le serveur NMS et le noeud PE distant, le message de requête de création de réseau VPN comportant un ID de réseau VPN, un nom de réseau VPN et l'étiquette de réseau VPN ;
après la réception du message de requête de création de réseau VPN, la création, par le noeud PE local et le noeud PE distant, d'une table de réseau VPN, et l'ajout de l'ID de réseau VPN, du nom de réseau VPN et de l'étiquette de réseau VPN à la table de réseau VPN ; et
l'ajout, par le serveur NMS, de l'entrée de table de routage de noeud CE local à la table de réseau VPN créée sur le noeud PE local.

3. Procédé de commande de route de réseau privé virtuel de couche 3 selon la revendication 1, dans lequel la création du réseau VPN pour le noeud PE local et le noeud PE distant respectivement, le noeud PE local et le noeud PE distant appartenant au réseau VPN, et l'ajout de l'entrée de table de routage de noeud CE local appartenant au réseau VPN créé sur le noeud PE local au réseau VPN créé sur le noeud PE local comprennent :
la délivrance, par un serveur de gestion de réseau NMS, d'un message de requête de création de réseau VPN au noeud PE local et au noeud PE distant par le biais d'une interface entre le serveur NMS et le noeud PE local et d'une interface entre le serveur NMS et le noeud PE distant, le message de requête de création de réseau VPN comportant un ID de réseau VPN et un nom de réseau VPN ;
après la réception du message de requête de création de réseau VPN, la création, par le noeud PE local et le noeud PE distant, d'une table de réseau VPN respectivement, l'attribution d'une étiquette de réseau VPN, et l'ajout de l'ID de réseau VPN, du nom de réseau VPN et de l'étiquette de réseau VPN à la table de réseau VPN ;
le renvoi, par le noeud PE local et le noeud PE distant, d'une réponse de création de réseau VPN au serveur NMS respectivement, la réponse de création de réseau VPN comportant un ID de noeud PE du noeud PE qui renvoie la réponse de création de réseau VPN, l'ID de réseau VPN et l'étiquette de réseau VPN ; et
l'ajout, par le serveur NMS, de l'entrée de table de routage de noeud CE local appartenant à chaque réseau VPN à chaque réseau VPN configuré respectivement.

4. Procédé de commande de route de réseau privé virtuel de couche 3 selon la revendication 2 ou 3, dans lequel l'acquisition, par le contrôleur de route L3VPN, d'informations d'attributs VPN du réseau VPN créé sur le noeud PE local et de l'entrée de table de routage de noeud CE local appartenant au réseau VPN, et l'acquisition d'informations d'attributs VPN du réseau VPN créé sur le noeud PE distant comprennent :
la signalisation active, par le noeud PE local et le noeud PE distant, de l'ID de réseau VPN et de l'étiquette de réseau VPN de chaque réseau VPN créé séparément sur les noeuds PE local et distant et de l'entrée de table de routage de noeud CE local dans le réseau VPN, au contrôleur de route L3VPN par le biais d'un message ; ou
la signalisation active, par le serveur NMS, de l'ID de réseau VPN et de l'étiquette de réseau VPN de chaque réseau VPN créé sur le noeud PE local et le noeud PE distant et de l'entrée de table de routage de noeud CE local dans le réseau VPN, au contrôleur de route L3VPN par le biais d'un message ou d'une interface ; ou
l'interrogation, par le contrôleur de route L3VPN, de l'ID de réseau VPN et de l'étiquette de réseau VPN du réseau VPN créé sur le noeud PE local et de l'entrée de table de routage de noeud CE local dans le réseau VPN, et l'interrogation, par le contrôleur de route L3VPN, de l'ID de réseau VPN et de l'étiquette de réseau VPN du réseau VPN créé sur le noeud PE distant ; ou
l'interrogation, par le contrôleur de route L3VPN, auprès du serveur NMS de l'ID de réseau VPN et de l'étiquette de réseau VPN du réseau VPN créé sur le noeud PE local et de l'entrée de table de routage de noeud CE local dans le réseau VPN ; et
l'interrogation, par le contrôleur de route L3VPN, auprès du serveur NMS de l'ID de réseau VPN et de l'étiquette de réseau VPN du réseau VPN créé sur le noeud PE distant.

5. Procédé de commande de route de réseau privé virtuel de couche 3 selon la revendication 2 ou 3, dans lequel la génération, par le contrôleur de route L3VPN, de l'entrée de table de routage de noeud CE distant en fonction des informations d'attributs VPN du réseau VPN créé sur le noeud PE local et de l'entrée de table de routage de noeud CE local dans le réseau VPN comprend :
l'utilisation, par le contrôleur de route L3VPN, d'une adresse de route qui se trouve dans l'entrée de table de routage de noeud CE local et est acquise auprès du noeud PE local, comme adresse de route dans l'entrée de table de routage de noeud CE distant dans le noeud PE distant, l'utilisation d'un ID de noeud du noeud PE local signalant une route d'utilisateur comme adresse de saut suivant dans l'entrée de table de routage de noeud CE distant dans le noeud PE distant, l'utilisation de l'étiquette de réseau VPN dans le noeud PE local signalant la route d'utilisateur comme étiquette de réseau VPN distant dans l'entrée de table de routage de noeud CE distant dans le noeud PE distant, et la génération de l'entrée de table de routage de noeud CE distant correspondant à l'entrée de table de routage de noeud CE local.

6. Procédé de commande de route de réseau privé virtuel de couche 3 selon la revendication 2 ou 3, dans lequel l'envoi, par le contrôleur de route L3VPN, de l'entrée de table de routage de noeud CE distant générée au noeud PE distant en fonction des informations d'attributs VPN du réseau VPN créé sur le noeud PE local et des informations d'attributs VPN du réseau VPN créé sur le noeud PE distant comprend :
l'envoi, par le contrôleur de route L3VPN, de l'entrée de table de routage de noeud CE distant générée au noeud PE distant, lequel appartient à un même réseau VPN que le noeud PE local, par le biais d'un message de configuration en fonction de l'ID de réseau VPN dans les informations d'attributs VPN du réseau VPN sur le noeud PE local et de l'ID de réseau VPN dans les informations d'attributs VPN du réseau VPN créé sur le noeud PE distant ; ou
la notification, par le contrôleur de route L3VPN, au serveur NMS de l'entrée de table de routage de noeud CE distant par le biais d'un message de configuration ou d'une interface entre le contrôleur de route L3VPN et le serveur NMS, le serveur NMS envoyant l'entrée de table de routage de noeud CE distant au noeud PE distant, lequel appartient au même réseau VPN que le noeud PE local, par le biais d'un message de configuration ou d'une interface entre le NMS et le noeud PE distant en fonction de l'ID de réseau VPN dans les informations d'attributs VPN du réseau VPN sur le noeud PE local et de l'ID de réseau VPN dans les informations d'attributs VPN du réseau VPN créé sur le noeud PE distant.

7. Procédé de commande de route de réseau privé virtuel de couche 3 selon la revendication 6, comprenant après l'envoi, par le contrôleur de route L3VPN, de l'entrée de table de routage de noeud CE distant générée au noeud PE distant en fonction des informations d'attributs VPN du réseau VPN créé sur le noeud PE local et des informations d'attributs VPN du réseau VPN créé sur le noeud PE distant :
après la réception de l'entrée de table de routage de noeud CE distant envoyée par le contrôleur de route L3VPN par le biais du message de configuration ou du serveur NMS, la recherche, par le noeud PE distant, d'un réseau VPN correspondant dans le noeud PE distant en fonction de l'ID de réseau VPN dans l'entrée de table de routage de noeud CE ;
la sauvegarde, par le noeud PE distant, d'une route d'utilisateur de l'entrée de table de routage de noeud CE distant, de l'ID de noeud du noeud PE local, et de l'étiquette de réseau VPN du noeud PE local dans l'entrée de table de routage de noeud CE distant du noeud PE distant ; et
l'ajout, par le noeud PE distant, de l'entrée de table de routage de noeud CE distant dans une base de données d'informations de réseau VPN qui est stockée localement par le noeud PE distant, et l'envoi de l'entrée de table de routage de noeud CE distant à une entrée de table de base d'informations d'acheminement FIB de réseau VPN qui est utilisée pour l'acheminement des paquets de données et située dans le noeud PE distant.

8. Procédé de commande de route de réseau privé virtuel de couche 3 selon la revendication 2 ou 3, dans lequel l'acheminement, par le noeud PE distant, du paquet de données provenant du noeud CE distant au noeud CE local comprend :
la réception, par le noeud PE distant, du paquet de données ayant comme destination une route de noeud CE local depuis une interface connectée au noeud CE distant ;
l'interrogation, par le noeud PE distant et en fonction d'un indice d'interface du paquet de données reçu, d'une base de données d'informations de réseau VPN stockée localement pour trouver un réseau VPN lié à l'indice d'interface ;
la comparaison, par le noeud PE distant, d'une adresse destinataire dans le paquet de données reçu à une adresse de route d'utilisateur dans chaque entrée de table de routage de noeud CE distant dans le réseau VPN lié à l'indice d'interface, et la recherche d'une entrée de table de routage de noeud CE distant où une adresse destinataire du paquet de données est cohérente avec l'adresse de route d'utilisateur ;
quand il est trouvé que l'entrée de table de routage de noeud CE distant où l'adresse destinataire du paquet de données est cohérente avec l'adresse de route d'utilisateur, l'ajout, par le noeud PE distant, d'une étiquette de réseau VPN dans l'entrée de table de routage de noeud CE distant au paquet de données ;
la recherche, par le noeud PE distant et en fonction d'une adresse de saut suivant de route distant dans l'entrée de table de routage de noeud CE distant, d'une base de données de réseau public stockée par le noeud PE distant pour trouver un tunnel de commutation par étiquettes multiprotocoles, MPLS, ayant comme adresse destinataire une adresse de saut suivant de route distant ; et
quand le tunnel MPLS ayant comme adresse destinataire une adresse de saut suivant de route distant est trouvé, l'ajout, par le noeud PE distant, d'un indice d'étiquette sortante dans le tunnel MPLS au paquet de données, et l'acheminement du paquet de données par le biais d'une interface sortante du tunnel MPLS.

9. Procédé de commande de route de réseau privé virtuel de couche 3 selon la revendication 8, dans lequel l'acheminement, par le noeud PE distant, du paquet de données provenant du noeud CE distant au noeud CD local comprend en outre :
l'arrivée par le paquet de données qui est acheminé par le biais du tunnel MPLS au noeud PE local, et l'extraction, par le noeud PE local, d'une étiquette du tunnel MPLS dans le paquet de données ;
l'extraction, par le noeud PE local, de l'étiquette de réseau VPN du paquet de données, et l'obtention d'un réseau VPN correspondant dans une table de réseau VPN dans le noeud PE local en fonction de l'étiquette de réseau VPN ;
après l'obtention du réseau VPN correspondant, la recherche, par le noeud PE local, d'une entrée de table de routage de noeud CE local en fonction de l'adresse destinataire du paquet de données ; et
après l'obtention de l'entrée de table de routage de noeud CE, l'acheminement, par le noeud PE local, du paquet de données en fonction d'un indice d'interface sortante dans l'entrée de table de routage de noeud CE local.

10. Contrôleur de route de réseau privé virtuel de couche 3, comprenant :
un module d'acquisition de route (10), configuré pour acquérir auprès d'un réseau privé virtuel de couche 3, L3VPN, des informations d'attributs VPN d'un VPN créé sur un noeud PE local et une entrée de table de routage de noeud CE local appartenant au réseau VPN ; et acquérir des informations d'attributs VPN d'un réseau VPN créé sur un noeud PE distant dans le réseau L3VPN ;
un module de conversion de route (11), configuré pour générer une entrée de table de routage de noeud CE distant en fonction des informations d'attributs VPN du réseau VPN créé sur le noeud PE local et de l'entrée de table de routage de noeud CE local, dans le réseau VPN ; et
un module de diffusion de route (12), configuré pour envoyer l'entrée de table de routage de noeud CE distant générée au noeud PE distant en fonction des informations d'attributs VPN du réseau VPN créé sur le noeud PE local et des informations d'attributs VPN du réseau VPN créé sur le noeud PE distant, de telle sorte que le noeud PE distant achemine un paquet de données provenant d'un noeud CE distant à un noeud CE local.

11. Contrôleur de route de réseau privé virtuel de couche 3 selon la revendication 10, dans lequel le module d'acquisition de route comprend :
une unité de réception de route (100), configurée pour recevoir un ID de réseau VPN et une étiquette de réseau VPN du réseau VPN créé sur le noeud PE local, l'entrée de table de routage de noeud CE local dans le réseau VPN, et un ID de réseau VPN et une étiquette de réseau VPN du réseau VPN créé sur le noeud PE distant, qui proviennent tous du noeud PE local et du noeud PE distant ou qui sont tous signalés par un serveur NMS par le biais d'un message ; et
une unité d'interrogation de route (101), configurée pour interroger le noeud PE local et le noeud PE distant ou interroger le serveur NMS sur l'ID de réseau VPN et de l'étiquette de réseau VPN du réseau VPN créé sur le noeud PE local, l'entrée de table de routage de noeud CE local dans le réseau VPN, et l'ID de réseau VPN et l'étiquette de réseau VPN du réseau VPN créé sur le noeud PE distant.

12. Contrôleur de route de réseau privé virtuel de couche 3 selon la revendication 10, le contrôleur de route L3VPN comprenant en outre :
un module de stockage de route (13), configuré pour : après que le module d'acquisition de route a acquis les informations d'attributs VPN du réseau VPN créé sur le noeud PE local, l'entrée de table de routage de noeud CE local dans le réseau VPN, et les informations d'attributs VPN de chaque réseau VPN configuré sur le noeud PE distant, adopter une base de données d'informations de réseau VPN pour sauvegarder, en fonction d'un ordre des ID de réseaux VPN dans les informations d'attributs VPN, des informations d'attributs provenant des réseaux VPN créés sur le noeud PE local et le noeud PE distant ; chaque information d'attributs VPN stockée dans la base de données d'informations de réseau VPN comprenant : un ID de réseau VPN, un nom de réseau VPN, une liste d'ID de noeud de chaque noeud PE et une liste d'étiquettes de réseau VPN attribuée par chaque noeud PE.

13. Contrôleur de route de réseau privé virtuel de couche 3 selon la revendication 10, dans lequel le module de conversion de route comprend :
une unité de conversion d'adresse de route (110), configurée pour utiliser une adresse de route qui se trouve dans l'entrée de table de routage de noeud CE local et est acquise à partir du réseau VPN créé sur le noeud PE local, comme adresse de route dans l'entrée de table de routage de noeud CE distant dans le noeud PE distant ;
une unité de conversion d'ID de noeud (111), configurée pour utiliser un ID de noeud du noeud PE local signalant une route d'utilisateur comme adresse de saut suivant dans l'entrée de table de routage de noeud CE distant dans le noeud PE distant ;
une unité de conversion d'étiquette de réseau VPN (112), configurée pour utiliser une étiquette de réseau VPN du noeud PE local signalant la route d'utilisateur comme étiquette de réseau VPN distant dans l'entrée de table de routage de noeud CE distant dans le noeud PE distant ; et
une unité de génération d'entrée de table de routage (113), configurée pour former l'entrée de table de routage de noeud CE distant correspondant à l'entrée de table de routage de noeud CE local en associant l'adresse de route, l'adresse de saut suivant et l'étiquette de réseau VPN, lesquelles sont converties par l'unité de conversion d'adresse de route, l'unité de conversion d'ID de noeud et l'unité de conversion d'étiquette de réseau VPN.

14. Contrôleur de route de réseau privé virtuel de couche 3 selon l'une quelconque des revendications 10 à 13, dans lequel le module de diffusion de route comprend :
une unité d'interaction avec le noeud PE (120), configurée pour envoyer l'entrée de table de routage de noeud CE distant générée au noeud PE distant, lequel appartient à un même réseau VPN que le noeud PE local, par le biais d'un message de configuration en fonction de l'ID de réseau VPN dans les informations d'attributs VPN du réseau VPN sur le noeud PE local et de l'ID de réseau VPN dans les informations d'attributs VPN du réseau VPN créé sur le noeud PE distant ; et
une unité d'interaction avec le serveur NMS (121), configurée pour notifier au serveur NMS l'entrée de table de routage de noeud CE distant par le biais d'un message de configuration ou d'une interface entre l'unité d'interaction avec le serveur NMS et le serveur NMS, le serveur NMS envoyant l'entrée de table de routage de noeud CE distant au noeud PE distant, lequel appartient au même réseau VPN que le noeud PE local, par le biais d'un message de configuration ou d'une interface entre le NMS et le noeud PE distant en fonction de l'ID de réseau VPN dans les informations d'attributs VPN du réseau VPN sur le noeud PE local et de l'ID de réseau VPN dans les informations d'attributs VPN du réseau VPN créé sur le noeud PE distant.
